(19) **Europäisches Patentamt**
**European Patent Office**
**Office européen des brevets**

(11) **EP 4 345 938 A2**

(12) **EUROPEAN PATENT APPLICATION**

(43) Date of publication:
03.04.2024 Bulletin 2024/14

(21) Application number: 23200286.5

(22) Date of filing: 28.09.2023

(51) International Patent Classification (IPC):
$H01M\ 4/131^{(2010.01)}$    $H01M\ 4/1391^{(2010.01)}$
$H01M\ 4/36^{(2006.01)}$    $H01M\ 4/505^{(2010.01)}$
$H01M\ 4/525^{(2010.01)}$    $H01M\ 4/62^{(2006.01)}$
$H01M\ 10/0525^{(2010.01)}$    $H01M\ 10/0562^{(2010.01)}$

(52) Cooperative Patent Classification (CPC):
H01M 4/366; H01M 4/131; H01M 4/1391;
H01M 4/505; H01M 4/525; H01M 4/62;
H01M 4/625; H01M 10/0525; H01M 10/0562;
H01M 2004/028

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 29.09.2022 KR 20220124524

(71) Applicant: **Samsung SDI Co., Ltd.
Gyeonggi-do 446-902 (KR)**

(72) Inventors:
• **SON, INHYUK
17084 Gyeonggi-do (KR)**

• **MAH, SANGKOOK
17084 Gyeonggi-do (KR)**
• **JO, SUNGNIM
17084 Gyeonggi-do (KR)**
• **HONG, SUKGI
17084 Gyeonggi-do (KR)**
• **SHIM, KYUEUN
17084 Gyeonggi-do (KR)**

(74) Representative: **Michalski Hüttermann & Partner
Patentanwälte mbB
Kaistraße 16A
40221 Düsseldorf (DE)**

(54) **POSITIVE ELECTRODE AND ALL-SOLID SECONDARY BATTERY INCLUDING THE SAME**

(57)    A positive electrode for an all-solid secondary battery includes a positive electrode active material layer on a positive electrode current collector. The positive electrode active material layer includes a composite positive electrode active material and a sulfide-based solid electrolyte. The composite positive electrode active material includes a core including a lithium transition metal oxide, and a shell on a surface of the core. The shell includes at least one first metal oxide and a first carbon-based material, and the first metal oxide is in a matrix of the first carbon-based material, where the first metal oxide is represented by a formula of $M_aO_b$ ($0<a\leq3$, $0<b<4$, and if a is an integer, b is not an integer), the lithium transition metal oxide includes nickel, and a nickel content is 80 mol% or more with respect to a total mole of transition metals included in the lithium transition metal oxide.

EP 4 345 938 A2

**Description**

**CROSS-REFERENCE TO RELATED APPLICATION**

The present application claims priority to and the benefit of Korean Patent Application No. 10-2022-0124524, filed on September 29, 2022, in the Korean Intellectual Property Office, the entire content of which is incorporated herein by reference.

**BACKGROUND**

**1. Field**

One or more embodiments of the present disclosure relate to a positive electrode and an all-solid secondary battery including the positive electrode.

**2. Description of the Related Art**

Recently, due to the demands of industry, batteries with relatively high energy density and safety have drawn attention and been actively developed. For example, lithium batteries are being commercialized not only in the fields of information-related devices and communication devices but also in the field of vehicles. In the field of vehicles, because the vehicles are related to safety of people, the safety of the lithium batteries is especially important.
Lithium batteries utilize, as an electrolyte, a liquid electrolyte including a flammable organic solvent, and thus, if (e.g., when) a short circuit occurs, there is a possibility of overheating and fire. Therefore, all-solid batteries utilizing a solid electrolyte instead of a liquid electrolyte have been proposed.
Because all-solid batteries do not utilize a flammable organic solvent, even if (e.g., when) a short circuit occurs, a possibility of fire or explosion may be considerably reduced. In such all-solid batteries, safety may be considerably increased and/or improved as compared with lithium batteries utilizing a liquid electrolyte.

**SUMMARY**

One or more aspects of embodiments of the present disclosure are directed toward to a positive electrode in which side reactions between a positive electrode active material and a solid electrolyte are suppressed or reduced, thereby preventing or reducing the deterioration of the performance of an all-solid secondary battery including the positive electrode.
One or more aspects of embodiments of the present disclosure are directed toward to an all-solid secondary battery including the positive electrode.
Additional aspects will be set forth in part in the description which follows and, in part, will be apparent from the description, or may be learned by practice of the presented embodiments of the disclosure.
According to one or more embodiments of the present disclosure, a positive electrode for an all-solid secondary battery includes: a positive electrode current collector; and a positive electrode active material layer on the positive electrode current collector, wherein the positive electrode active material layer includes a composite positive electrode active material and a sulfide-based solid electrolyte, the composite positive electrode active material includes: a core including a lithium transition metal oxide; and a shell on a surface of the core, wherein the shell includes a first metal oxide (e.g., at least one first metal oxide) and a first carbon-based material, and the first metal oxide is in a matrix of the first carbon-based material, the first metal oxide is represented by a formula of $M_aO_b$ (wherein $0<a\leq3$, $0<b<4$, and if (e.g., when) a is 1, 2, or 3, b is not an integer, and M is at least one metal selected from Groups 2 to 16 of the Periodic Table of Elements), the lithium transition metal oxide includes nickel, and a nickel content (e.g., amount) is 80 mol% or more with respect to a total number of moles of transition metals included in the lithium transition metal oxide.
According to one or more embodiments of the present disclosure, a positive electrode includes the above-described positive electrode active material.
According to one or more embodiments of the present disclosure, an all-solid secondary battery includes:
the positive electrode; a negative electrode; and a solid electrolyte layer between the positive electrode and the negative electrode.

**BRIEF DESCRIPTION OF THE DRAWINGS**

The accompanying drawing is included to provide a further understanding of the present disclosure, and is incorporated in and constitutes a part of this specification. The drawing illustrates example embodiments of the present disclosure and, together with the description, serve to explain principles of present disclosure. The above and other aspects, features, and advantages of certain embodiments of the disclosure will be more apparent from the following description taken in conjunction with the accompanying drawings, in which:

FIG. 1 is a cross-sectional view of a positive electrode according to one or more embodiments of the present disclosure;

FIG. 2 is a schematic cross-sectional view of a composite positive electrode active material particle according to one or more embodiments of the present disclosure;

FIG. 3 is a cross-sectional view of composite positive electrode active material particles in the art;

FIG. 4 is a cross-sectional view of an all-solid secondary battery according to one or more embodiments of the present disclosure;

FIG. 5 is a cross-sectional view of an all-solid secondary battery according to one or more embodiments of the present disclosure;

FIG. 6 is a cross-sectional view of an all-solid secondary battery according to one or more embodiments of the present disclosure;

FIG. 7 is a cross-sectional view of an all-solid secondary battery according to one or more embodiments of the present disclosure;

FIG. 8 is a cross-sectional view of a bi-cell all-solid secondary battery according to one or more embodiments of the present disclosure;

FIG. 9A is a scanning electron microscope image of a cross section of a composite positive electrode active material prepared in Example 3;

FIG. 9B is an energy-dispersive X-ray spectroscopy (EDS) mapping image of the cross section of the composite positive electrode active material prepared in Example 3;

FIG. 10 is an X-ray photoelectron spectroscopy (XPS) image of bare NCA94 prepared in Comparative Example 1, a composite prepared in Preparation Example 1, and a composite positive electrode active material prepared in Example 1; and

FIG. 11 is a Raman spectrum image of the composite prepared in Preparation Example 1 and the composite positive electrode active material prepared in Example 1.

## DETAILED DESCRIPTION

Reference will now be made in more detail to embodiments, examples of which are illustrated in the accompanying drawings, wherein like reference numerals refer to like elements throughout the present disclosure, and duplicative descriptions thereof may not be provided for conciseness. In this regard, the embodiments of the present disclosure may have different forms and should not be construed as being limited to the descriptions set forth herein. Accordingly, the embodiments of the present disclosure are merely described, by referring to the drawings, to explain aspects of the present disclosure. As utilized herein, the term "and/or" or "or" may include any and all combinations of one or more of the associated listed items. Expressions such as "at least one of," "one of," and "selected from," if (e.g., when) preceding a list of elements, modify the entire list of elements and do not modify the individual elements of the list. For example, "at least one of a, b, or c", "at least one selected from a, b, and c", "at least one selected from among a to c", etc., may indicate only a, only b, only c, both (e.g., simultaneously) a and b, both (e.g., simultaneously) a and c, both (e.g., simultaneously) b and c, all of a, b, and c, or variations thereof. The "/" utilized herein may be interpreted as "and" or as "or" depending on the situation.

Various embodiments are illustrated in the accompanying drawings. The present disclosure may, however, be embodied in different forms and should not be construed as limited to the embodiments set forth herein. Rather, these embodiments are provided so that the disclosure will be thorough and complete, and will fully convey the scope of the present disclosure to those skilled in the art. Like reference numerals designate like elements.

If (e.g., when) it is described that an element is "on" another element, it will be understood that the element may be disposed directly on the other element or still another element may be interposed therebetween. On the other hand, if (e.g., when) it is described that an element is "directly on" another element, still another element (e.g., an intervening element) is not interposed therebetween.

It will be understood that, although the terms "first," "second," and "third" may be utilized herein to describe one or more suitable elements, components, regions, layers, and/or sections, these elements, components, regions, layers, and/or sections should not be limited by these terms. These terms are only utilized to distinguish one element, component, region, layer, or section from another region, layer, or section. Thus, a first element, component, region, layer, or section described may be termed a second element, component, region, layer, or section without departing from the teachings of the present disclosure.

The term utilized herein is intended to describe only a specific embodiment and is not intended to limit the present disclosure. As utilized herein, the singular forms "a," "an," and "the" are intended to include the plural forms, including "at least one," unless the content clearly indicates otherwise. "At least one" should not be construed as being limited to the singular. As utilized herein, the terms "include(s)/comprise(s)," "including/comprising," "have/has," and/or "having," if (e.g., when) utilized in the detailed description, specify a presence of stated features, regions, integers, steps, operations, elements, and/or components, but do not preclude the presence or addition of one or more other features, regions, integers, steps, operations, elements, components, and/or groups thereof. Further, the utilization of "may" when describing embodiments of the present disclosure may refer to "one or more embodiments of the present disclosure".

Spatially relative terms such as "beneath," "below," "lower," "above," and "upper" may be utilized herein to easily describe one element or feature's relationship to another element or feature. It will be understood that the spatially relative terms are intended to encompass different orientations of a device in utilization or operation in addition to the orientation illustrated in the drawings. For example, if (e.g., when) a device in the drawings is turned over, elements described as "below" or "beneath" other elements or features would then be "above" or "over" the other elements or features. Thus, the example term "below" may encompass both (e.g., simultaneously) orientations of above and below. The device may be otherwise oriented (e.g., rotated 90 degrees or at other orientations), and the spatially relative terms utilized herein may be interpreted accordingly.

Unless otherwise defined, all terms (including technical and scientific terms) utilized herein have the same meaning as commonly understood by one of ordinary skill in the art to which the disclosure belongs. In some embodiments, it will be further understood that terms, such as those defined in commonly utilized dictionaries, should be interpreted as having a meaning that is consistent with their meaning in the context of the relevant art and the disclosure, and will not be interpreted in an idealized or overly formal sense unless expressly so defined herein.

Embodiments are described herein with reference to cross-sectional views which are schematic diagrams of idealized embodiments. As such, variations from the shapes of the illustrations as a result, for example, of manufacturing techniques and/or tolerances, may be to be expected. Thus, the embodiments described herein should not be construed as limited to the particular shapes of regions of illustrated herein but may include deviations in shapes that result, for example, from manufacturing. For example, regions illustrated or described as being flat may be typically rough and/or have nonlinear features. Moreover, sharp-drawn angles may be round. Thus, regions illustrated in the drawings are schematic in nature and their shapes may not be intended to illustrate or limit the actual shape of a region and may not be intended to limit the scope of the claims.

The term "Group" refers to a group of the periodic table of the elements according to the International Union of Pure and Applied Chemistry ("IUPAC") Groups 1-18 group classification system.

The term "particle diameter" of particles as utilized herein refers to an average diameter if (e.g., when) particles are substantially spherical or refers to an average major axis length if (e.g., when) particles are non-spherical. A particle diameter may be measured utilizing a particle size analyzer (PSA). A "particle diameter" may be, for example, an average particle diameter. An "average particle diameter" refers to, for example, D50, which is a median particle diameter.

D50 refers to a particle size corresponding to a 50 % cumulative volume if (e.g., when) a particle size distribution measured through a laser diffraction method is calculated from particles having a smaller particle size to particles having a larger particle size.

D90 refers to a particle size corresponding to a 90 % cumulative volume if (e.g., when) a particle size distribution measured through a laser diffraction method is calculated from particles having a smaller particle size to particles having a larger particle size.

D10 refers to a particle size corresponding to a 10 % cumulative volume if (e.g., when) a particle size distribution measured through a laser diffraction method is calculated from particles having a smaller particle size to particles having a larger particle size.

The term "metal" as utilized herein may include all of metals and metalloids such as silicon and germanium in an elemental or ionic state.

The term "alloy" as utilized herein may refer to a mixture of two or more metals.

The term "electrode active material" as utilized herein may refer to an electrode material that may undergo lithiation or delithiation.

The term "positive electrode active material" as utilized herein may refer to an electrode material that may undergo lithiation or delithiation.

The term "negative electrode active material" as utilized herein may refer to a negative electrode material that may undergo lithiation or delithiation.

The terms "lithiate" and "lithiating" as utilized herein may refer to a process of adding lithium to an electrode active material.

The terms "delithiate" and "delithiating" as utilized herein may refer to a process of removing lithium from an electrode active material.

The terms "charge" and "charging" as utilized herein may refer to a process of providing electrochemical energy to a battery.

The terms "discharge" and "discharging" as utilized herein may refer to a process of removing electrochemical energy from a battery.

The terms "positive electrode" and "cathode" as utilized herein may refer to an electrode at which electrochemical reduction and lithiation occur during a discharging process.

The terms "negative electrode" and "anode" as utilized herein refer to an electrode at which electrochemical oxidation and delithiation occur during a discharging process.

While example embodiments will have been described, alternatives, modifications, variations, improvements, and substantial equivalents that are or may be presently unforeseen may arise to applicants or others skilled in the ar. Accordingly, the appended claims as filed and as they may be amended are intended to embrace all such alternatives, modifications, variations, improvements, and substantial equivalents.

Hereinafter, a positive electrode for an all-solid secondary battery and an all-solid secondary battery including the positive electrode according to one or more embodiments will be described in more detail.

**Positive electrode**

A positive electrode for an all-solid secondary battery according to one or more embodiments may include: a positive electrode current collector; and a positive electrode active material layer on the positive electrode current collector, wherein the positive electrode active material layer may include a composite positive electrode active material (e.g., in the form of particles) and a sulfide-based solid electrolyte (e.g., in the form of particles), the composite positive electrode active material may include: a core including a lithium transition metal oxide; and a shell on a surface of the core, the shell may include a first metal oxide (e.g., at least one first metal oxide) and a first carbon-based material, and the first metal oxide is in a matrix of the first carbon-based material, wherein the first metal oxide may be represented by a formula of $M_aO_b$ (wherein $0<a\leq3$, $0<b<4$, and if (e.g., when) a is 1, 2, or 3, b is not an integer, and M may be at least one metal selected from Groups 2 to 16 of the Periodic Table of Elements), the lithium transition metal oxide may include nickel, and a nickel content (e.g., amount) may be 80 mol% or more with respect to the total number of moles of transition metals included in the lithium transition metal oxide.

The composite positive electrode active material may include the core and the shell. Because the shell includes the first metal oxide disposed in the matrix of the first carbon-based material, electronic conductivity due to the matrix of the first carbon-based material and ionic conductivity due to the first metal oxide may be concurrently (e.g., simultaneously) provided. The matrix of the first carbon-based material and the first metal oxide may form, for example, a first composite. The first composite may serve as a mixed conductor having electronic conductivity and ionic conductivity. Because the first composite concurrently (e.g., simultaneously) provides electronic conductivity and ionic conductivity, a stable interface may be formed between the core of the composite positive electrode active material and a solid electrolyte. During charging/discharging of an all-solid secondary battery, an increase in interfacial resistance between the core of the composite positive electrode active material and the solid electrolyte may be effectively suppressed or reduced. As a result, the cycle characteristics of an all-solid secondary battery including the positive electrode may be improved.

In a composite positive electrode active material having a shell made of a carbon-based material, the carbon-based material may serve as a kind of carbon electrode that only transfers (or substantially transfers only) electrons, thereby promoting decomposition of a solid electrolyte at a high potential. Therefore, the composite positive electrode active material having a shell made of a carbon-based material is not suitable for application to a positive electrode including a solid electrolyte. In contrast, in the positive electrode active material having the shell that includes the first composite, because the first composite serves as a mixed conductor that transfers (or substantially transfers both) electrons and ions, decomposition of the solid electrolyte may be suppressed or reduced even at a high potential. Therefore, the composite positive electrode active material including the shell that includes the first composite is suitable for application to a positive electrode including a solid electrolyte.

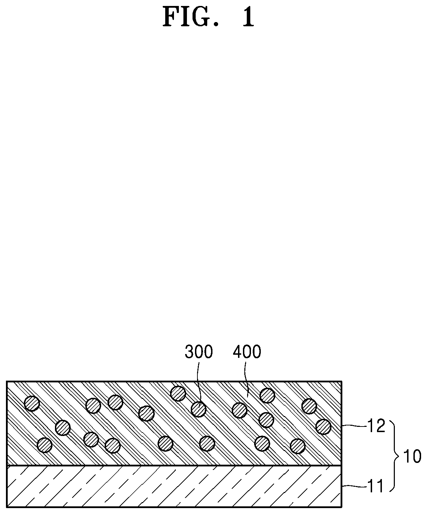

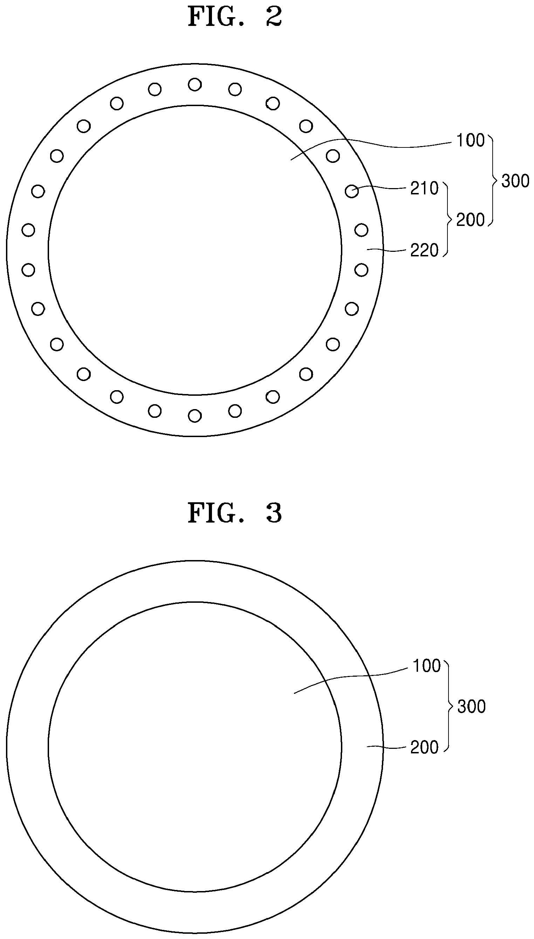

Referring to FIG. 1 and FIG. 2, a positive electrode 10 may include: a positive electrode current collector 11; and a positive electrode active material layer 12 on the positive electrode current collector 11. The positive electrode active material layer 12 may include a composite positive electrode active material 300 and a sulfide-based solid electrolyte 400. The composite positive electrode active material 300 may include: a core 100 including a lithium transition metal oxide; and a shell 200 on a surface of the core 100. The shell 200 may include at least one first metal oxide 210 and a first carbon-based material 220, and the first metal oxide 210 may be in a matrix of the first carbon-based material 220. The first metal oxide 210 may be represented by a formula of $M_aO_b$ (wherein $0<a\leq3$, $0<b<4$, and if (e.g., when) a is 1, 2, or 3, b is not an integer, and M may be at least one metal selected from Groups 2 to 16 of the Periodic Table of Elements). The lithium transition metal oxide may include nickel, and a nickel content (e.g., amount) may be 80 mol% or more with respect to the total number of moles of transition metals included in the lithium transition metal oxide. The positive electrode 10 may be utilized in an all-solid secondary battery.

**Positive electrode: composite positive electrode active material**

Referring to FIG. 2, the composite positive electrode active material 300 includes the core 100 and the shell 200 consecutively or nonconsecutively disposed along (e.g., on) the surface of the core 100. The shell 200 may cover the entirety or a portion of the core 100. The core 100 may include the lithium transition metal oxide, and the shell 200 may include the first metal oxide 210 and the first carbon-based material 220. The shell 200 may include, for example, a first composite including a plurality of first metal oxides 210 (e.g., plurality of first metal oxide particles) disposed in the matrix of the first carbon-based material 220.

The first metal oxide may include a first metal, and the first metal may include, for example, at least one selected from aluminum (Al), niobium (Nb), magnesium (Mg), scandium (Sc), titanium (Ti), zirconium (Zr), vanadium (V), tungsten (W), manganese (Mn), iron (Fe), cobalt (Co), palladium (Pd), copper (Cu), silver (Ag), zinc (Zn), antimony (Sb), silicon (Si), and selenium (Se). The first metal oxide 210 may include, for example, at least one selected from $Al_2O_z$ (wherein $0<z<3$), $NbO_x$ (wherein $0<x<2.5$), $MgO_x$ (wherein $0<x<1$), $Sc_2O_z$ (wherein $0<z<3$), $TiO_y$ (wherein $0<y<2$), $ZrO_y$ (wherein $0<y<2$), $V_2O_z$ (wherein $0<z<3$), $WO_y$ (wherein $0<y<2$), $MnO_y$ (wherein $0<y<2$), $Fe_2O_z$ (wherein $0<z<3$), $Co_3O_w$ (wherein $0<w<4$), $PdO_x$ (wherein $0<x<1$), $CuO_x$ (wherein $0<x<1$), $AgO_x$ (wherein $0<x<1$), $ZnO_x$ (wherein $0<x<1$), $Sb_2O_z$ (wherein $0<z<3$), $SiO_z$ (wherein $0<z<2$), and $SeO_y$ (wherein $0<y<2$). Because the shell 200 includes the first composite, and the first composite includes the matrix of the first carbon-based material 220 and the first metal oxide 210, the shell 200 may serve as a buffer layer having ionic conductivity and electronic conductivity. Because the first metal oxide 210 is disposed in the matrix of the first carbon-based material 220, the withstand voltage stability of the composite positive electrode active material 300 may be further improved. For example, in some embodiments, the shell 200 may include $Al_2O_x$ (wherein $0<x<3$) as the first metal oxide 210. The shell 200 may include, for example, a first composite in which the plurality of first metal oxides 210 (e.g., in the form of particles) are disposed in the matrix of the first carbon-based material 220. Because the first composite serves as a mixed conductor providing both (e.g., simultaneously) ionic conductivity and electronic conductivity, side reactions between the lithium transition metal oxide core and the sulfide-based solid electrolyte may be suppressed or reduced. As a result, the cycle characteristics of an all-solid secondary battery including the composite positive electrode active material may be improved. In contrast, referring to FIG. 3, a composite positive electrode active material 300 in the art may include a core 100 and a shell 200, and the shell 200 may include (e.g., consist of) a carbon-based material. In such a composite positive electrode active material 300 in the art, because the shell 200 is made of a carbon-based material having low ionic conductivity, decomposition of a solid electrolyte at a high potential may be promoted, thereby causing the deterioration of an all-solid secondary battery. In some embodiments, referring to FIG. 3, a composite positive electrode active material 300 in the art may include a core 100 and a shell 200, and the shell 200 may be made of a metal oxide material. In such a composite positive electrode active material 300 in the art, because the shell 200 includes (e.g., consists of) a metal oxide material having low electronic conductivity, internal resistance of a positive electrode may be increased, thereby deteriorating the cycle characteristics of an all-solid secondary battery.

The first carbon-based material may be, for example, a crystalline carbon-based material. In some embodiments, the first carbon-based material may include, for example, a carbon-based nanostructure. In one or more embodiments, the first carbon-based material may include, for example, a carbon-based two-dimensional nanostructure. In some embodiments, the first carbon-based material may include, for example, graphene. In these embodiments, because the shell including graphene and/or a matrix thereof has flexibility, the shell may easily accommodate a volume change of the composite positive electrode active material during charging/discharging, thereby suppressing cracks from occurring inside the composite positive electrode active material. Because graphene has high electronic conductivity, interfacial resistance between the composite positive electrode active material and the solid electrolyte may be reduced. A nanostructure carbon-based material that does not include a first metal oxide may be easily aggregated and thus may be difficult to apply along a surface of a lithium transition metal oxide core.

In one or more embodiments, the shell may include, for example, a first metal oxide and a first carbon-based material. Because the first carbon-based material is derived, for example, from a graphene matrix, the first carbon-based material may have a relatively low density and high porosity as compared with a carbon-based material derived from a graphite-based material. A d002 interplanar distance of the first carbon-based material may be, for example, 3.38 Å or more, 3.40 Å or more, 3.45 Å or more, 3.50 Å or more, 3.60 Å or more, 3.80 Å or more, or 4.00 Å or more. The d002 interplanar distance of the first carbon-based material included in the shell may be, for example, in a range of about 3.38 Å to about 4.0 Å, about 3.38 Å to about 3.8 Å, about 3.38 Å to about 3.6 Å, about 3.38 Å to about 3.5 Å, or about 3.38 Å to about 3.45 Å. In contrast, a d002 interplanar distance of the carbon-based material derived from the graphite-based material may be, for example, 3.38 Å or less or 3.35 to 3.38 Å. Because the first metal oxide has withstand voltage and/or ionic conductivity and the first carbon-based material has electronic conductivity, during charging/discharging at a high voltage, it may prevent or reduce the deterioration of a lithium transition metal oxide included in a core and prevent or reduce side reactions between the core and a solid electrolyte. The shell may include, for example, at least one first metal oxide or two or more different first metal oxides. As a result, the high-temperature cycle characteristics of a lithium battery including the above-described composite positive electrode active material may be improved.

In one or more embodiments, the shell may further include a second metal oxide (e.g., at least one second metal oxide) different from the first metal oxide. The second metal oxide may be represented by a formula of $M_aO_c$ (wherein $0<a\leq3$, $0<c<4$, and if (e.g., when) a is 1, 2, or 3, c is an integer, and M may be at least one metal selected from Groups 2 to 16 of the Periodic Table of Elements). For example, in some embodiments, the second metal oxide may include the same metal as the first metal oxide, and c/a that is a ratio of c to a of the second metal oxide may have a larger value than b/a that is a ratio of b to a of the first metal oxide. For example, c/a > b/a. The second metal oxide may be disposed, for example, in the matrix of the first carbon-based material. Because the second metal oxide is additionally disposed in the matrix of the first carbon-based material, the uniformity of the shell disposed on the core may be further improved, and the withstand voltage stability of the composite positive electrode active material may be further improved. For example, in one or more embodiments, the shell may include $Al_2O_3$ as the second metal oxide. The second metal oxide may be selected from, for example, $Al_2O_3$, $NbO$, $NbO_2$, $Nb_2O_5$, $MgO$, $Sc_2O_3$, $TiO_2$, $ZrO_2$, $V_2O_3$, $WO_2$, $MnO_2$, $Fe_2O_3$, $Co_3O_4$, $PdO$, $CuO$, $AgO$, $ZnO$, $Sb_2O_3$, $SiO_2$, and $SeO_2$. The first metal oxide may be, for example, a reduction product of the second metal oxide. A portion or the entirety of the second metal oxide may be reduced to obtain the first metal oxide. Accordingly, the first metal oxide has a lower oxygen content (e.g., amount) and a lower metal oxidation number than the second metal oxide. In some embodiments, the shell may include, for example, $Al_2O_x$ (wherein $0<x<3$) that is the first metal oxide and $Al_2O_3$ that is the second metal oxide.

The shell may include, for example, the first carbon-based material, and the core may include, for example, the lithium transition metal oxide. In one or more embodiments, the first carbon-based material may be chemically bound to a transition metal of the lithium transition metal oxide, for example, through a chemical bond. A carbon atom (C) of the first carbon-based material may be chemically bound to a transition metal (Me) of the lithium transition metal oxide through a C-O-Me bond (for example, a C-O-Ni bond or a C-O-Co bond), for example, via an oxygen atom. The first carbon-based material in the shell may be chemically bound to the lithium transition metal oxide in the core through a chemical bond, thereby allowing the core and the shell to be a composite (e.g., conjugated composite). Therefore, the composite positive electrode active material may be distinguished from a simple physical mixture of the first carbon-based material and the lithium transition metal oxide. In one or more embodiments, the first metal oxide may also be chemically bound to the first carbon-based material through a chemical bond. Here, the chemical bond may be, for example, a covalent bond or an ionic bond.

In one or more embodiments, the shell may include, for example, at least one selected from the first metal oxide and the second metal oxide, and a particle diameter of at least one selected from the first metal oxide and the second metal oxide may be, for example, in a range of about 1 nm to about 100 nm, about 1 nm to about 50 nm, about 1 nm to about 30 nm, about 5 nm to about 30 nm, or about 10 nm to about 30 nm. Because the first metal oxide and/or the second metal oxide have a particle diameter in such a nanometer-range, the first metal oxide and/or the second metal oxide may be more uniformly distributed in the matrix of the first carbon-based material. If (e.g., when) the particle size of at least one selected from the first metal oxide and the second metal oxide is excessively increased, internal resistance of the composite positive electrode active material may increase due to an increase in a thickness of the shell. If (e.g., when) the particle size of at least one selected from the first metal oxide and the second metal oxide is excessively decreased, substantially uniform dispersion may be difficult.

The shell may include, for example, the first metal oxide and/or the second metal oxide and may include the first carbon-based material. The first carbon-based material may be disposed in a direction in which the first carbon-based material protrudes from a surface of the first metal oxide and/or the second metal oxide. The first carbon-based material may epitaxially grow on the surface of the first metal oxide and/or the second metal oxide to be disposed in the direction in which the first carbon-based material protrudes from the surface of the first metal oxide and/or the second metal oxide. The first carbon-based material disposed in the direction in which the first carbon-based material protrudes from the surface of the first metal oxide and/or the second metal oxide may include, for example, a carbon-based two-dimensional nanostructure, a carbon-based flake, and/or a graphene.

In one or more embodiments, the shell may further include, for example, a second carbon-based material, a third metal oxide, or a combination thereof.

In one or more embodiments, the shell may further include, for example, the second carbon-based material. The second carbon-based material may include, for example, fibrous carbon having an aspect ratio of 10 or more. Therefore, because the shell includes the second carbon-based material, a conducting path of the composite positive electrode active material may be further extended. The second carbon-based material may form a three-dimensional conducting network between a plurality of composite positive electrode active materials (e.g., composite positive electrode action material particles) to reduce internal resistance of a positive electrode including the composite positive electrode active material. The fibrous carbon may be fixed onto the composite positive electrode active material, thereby forming a substantially uniform and stable three-dimensional conducting network between the plurality of composite positive electrode active materials. Therefore, because the composite positive electrode active material includes the second carbon-based material, the high rate characteristics of an all-solid secondary battery including the composite positive electrode active material may be improved. The second carbon-based material may protrude from a surface of the composite positive electrode active material. Therefore, the second carbon-based material may effectively provide a conducting network between a plurality of composite positive electrode active material particles. The second carbon-based material may be disposed in the matrix of the first carbon-based material and thus may be easily applied on the core. The matrix of the first carbon-based material may serve as a binder for binding the core and the second carbon-based material. If (e.g., when) there is no matrix of the first carbon-based material, it is difficult for the second carbon-based material to be easily attached to the core, or the second carbon-based material may be easily detached from the core in a process of preparing a slurry for a positive electrode. If (e.g., when) a binder is added to bind the lithium transition metal oxide core and the second carbon-based material, the lithium transition metal oxide core may be covered with an insulating binder, which may increase internal resistance of the composite positive electrode active material. If (e.g., when) the core covered with the second carbon-based material and the binder is subjected to high-temperature heat treatment to carbonize the binder, the core and the second carbon-based material may be deteriorated during a heat treatment process. The second carbon-based material may have an aspect ratio of 10 or more or 20 or more. In some embodiments, the second carbon-based material may have, for example, an aspect ratio of about 10 to about 10,000, about 10 to about 5,000, about 10 to about 1,000, about 10 to about 500, about 10 to about 100, or about 10 to about 50. The aspect ratio of the second carbon-based material may be, for example, a ratio of a length of a major axis passing through a center of the second carbon-based material (e.g., a longitudinal length of the second carbon-based material) to a length of a minor axis passing through the center of the second carbon-based material and normal or perpendicular to the major axis, that is, a diameter of the second carbon-based material. In some embodiments, the second carbon-based material may be, for example, a diameter of 50 nm or less, 30 nm or less, 20 nm or less, or 10 nm or less. In some embodiments, the second carbon-based material may have, for example, a diameter of about 1 nm to about 50 nm, about 1 nm to about 30 nm, or about 1 nm to about 10 nm. If (e.g., when) the diameter of the second carbon-based material is excessively large, the absolute number of strands per volume may decrease, and thus an effect of reducing internal resistance may be insignificant. If (e.g., when) the diameter of the second carbon-based material is excessively small, substantially uniform dispersion may be difficult. In some embodiments, the second carbon-based material may have, for example, a length of about 100 nm to 1,000 $\mu$m, about 100 nm to about 500 $\mu$m, about 100 nm to about 100 $\mu$m, about 100 nm to about 50 $\mu$m, about 100 nm to about 10 $\mu$m, about 100 nm to about 5 $\mu$m, about 100 nm to about 2 $\mu$m, about 100 nm to about 1 $\mu$m, about 100 nm to about 500 nm, or about 100 nm to about 300 nm. As the length of the second carbon-based material increases, internal resistance of an electrode may decrease . If (e.g., when) the length of the second carbon-based material is excessively short, it may be difficult to provide an effective conducting path. In one or more embodiments, the second carbon-based material may include, for example, carbon nanofibers, carbon nanotubes, or a combination thereof. The carbon nanotubes may include, for example, a carbon nanotube primary structure, a carbon nanotube secondary structure formed by aggregating a plurality of carbon nanotube primary structures, or a combination thereof. The carbon nanotube primary structure may be one carbon nanotube unit. The carbon nanotube primary structure may include, for example, single-walled carbon nanotubes (SWCNTs), double-walled carbon nanotubes (DWCNTs), multi-walled carbon nanotubes (MWCNTs), or a combination thereof. The carbon nanotube secondary structure may be a structure formed by carbon nanotube primary structures being gathered and/or assembled to entirely or partially constitute a bundle type or kind or a rope type or kind. The carbon nanotube secondary structure may include, for example, bundle-type or kind carbon nanotubes, rope-type or kind carbon nanotubes, or a combination thereof.

In one or more embodiments, the shell may further include, for example, the third metal oxide. The third metal oxide may include, for example, a lithium metal oxide. The lithium metal oxide may include, for example, lithium aluminum oxide (LAO), lithium titanium oxide (LTO), lithium zirconium oxide (LZO), lithium zirconium phosphate (LZP), or a combination thereof. Because the shell further includes the third metal oxide, ionic conductivity of the composite positive electrode active material may be further improved. The LAO may be, for example, $LiAlO_2$. The LTO may be, for example, $Li_4Ti_5O_{12}$, $Li_2TiO_3$, and/or the like. The LZO may be, for example, $Li_2O\text{-}ZrO_2$. The LZP may be, for example, $Li_2ZrP_2O_3$.

The shell may have, for example, a thickness of about 10 nm to about 2 $\mu$m, about 30 nm to about 1 $\mu$m, about 50 nm to about 1 $\mu$m, about 100 nm to about 500 nm, about 100 nm to about 300 nm, or about 100 nm to about 200 nm. Because the shell has a thickness in such a range, it may further improve electronic conductivity of a positive electrode including the composite positive electrode active material.

The shell may have, for example, a single layer structure or a multi-layer structure. In some embodiments, the multi-layer structure may have, for example, a two- to five-layer structure. In some embodiments, the single layer structure may have, for example, a first layer structure including a first metal oxide or a first layer structure including a first metal oxide and a second metal oxide. In some embodiments, the multi-layer structure may include, for example, a first layer including a first metal oxide and a second layer including a second metal oxide. In some embodiments, the multi-layer structure may include, for example, a first layer including a third metal oxide and a second layer including a first metal oxide. In some embodiments, the multi-layer structure may include, for example, a first layer including a third metal oxide and a second layer including a first metal oxide and a second metal oxide. In some embodiments, the multi-layer structure may include, for example, a first layer including a first metal oxide and a second layer including a third metal oxide. In some embodiments, the multi-layer structure may include, for example, a first layer including a first metal oxide and a second metal oxide and a second layer including a third metal oxide.

The shell may be a dry coating layer prepared through a dry method. The dry method may include, for example, mechanical milling, but embodiments of the present disclosure are not necessarily limited thereto. Any method utilized as a dry method in the art may be utilized.

A content (e.g., amount) of the shell may be, for example, in a range of about 0.01 wt% to about 5 wt%, about 0.05 wt% to about 4 wt%, about 0.05 wt% to about 3 wt%, about 0.05 wt% to about 2 wt%, about 0.05 wt% to about 1.05 wt%, or about 0.05 wt % to about 1 wt % with respect to the total weight of the composite positive electrode active material. A content (e.g., amount) of the first metal oxide may be, for example, in a range of about 0.006 wt% to about 3 wt%, about 0.03 wt% to about 2.4 wt%, about 0.03 wt% to about 1.8 wt%, about 0.03 wt% to about 1.2 wt%, or 0.03 wt% % to about 0.9 wt%, or about 0.03 wt% to about 0.6 wt% of the total weight of the composite positive electrode active material. Because the composite positive electrode active material includes each of the shell and the first metal oxide in such content (e.g., amount) ranges, the cycle characteristics of a lithium battery including the composite positive electrode active material may be further improved.

The shell disposed along the surface of the core may be formed by coating the core with, for example, a second composite including a first metal oxide and a first carbon-based material such as graphene through milling and/or the like. Accordingly, the shell consecutively or nonconsecutively disposed along the surface of the core may include at least one of the second composite including the first metal oxide and the first carbon-based material such as graphene and/or a milling product of the second composite. The first metal oxide may be disposed in a matrix of the carbon-based material, for example, a graphene matrix. The shell may be prepared, for example, from the second composite including the first metal oxide and the first carbon-based material such as graphene. In some embodiments, the second composite may further include a second metal oxide in addition to the first metal oxide. In some embodiments, the second composite may include, for example, at least one first metal oxide. In some embodiments, the second composite may include, for example, at least one first metal oxide and at least one second metal oxide.

A content (e.g., amount) of at least one selected from the second composite and the milling product thereof may be, for example, 5 wt% or less, 3 wt% or less, 2 wt% or less, 1.5 wt% or less, or 1 wt% or less of the total weight of the composite positive electrode active material. In one or more embodiments, the content (e.g., amount) of at least one selected from the second composite and the milling product thereof may be in a range of about 0.01 wt% to about 5 wt%, about 0.01 wt% to about 4 wt%, about 0.01 wt% to about 3 wt%, about 0.01 wt% to about 2 wt%, about 0.01 wt % to about 1.5 wt %, or about 0.01 wt % to about 1 wt %, based on the total weight of the composite positive electrode active material. Because the composite positive electrode active material includes at least one selected from the second composite material and the milling product thereof in such a range, it may further improve the cycle characteristics of an all-solid secondary battery including the composite positive electrode active material.

The second composite may include at least one selected from the first metal oxide and the second metal oxide. At least one selected from the first metal oxide and the second metal oxide may have a particle diameter of about 1 nm to about 100 nm, about 1 nm to about 50 nm, about 1 nm to about 30 nm, about 5 nm to about 30 nm, or about 10 nm to about 30 nm. Because the first metal oxide and/or the second metal oxide have a particle diameter in such a nanometer-range, the first metal oxide and/or the second metal oxide may be more uniformly distributed in a matrix of the first carbon-based material of the second composite. Therefore, such a second composite may be uniformly applied on the core without agglomeration to form the shell. In one or more embodiments, the first metal oxide and/or the second metal oxide may have a particle diameter in such a range and thus may be more uniformly disposed on the core. Accordingly, the first metal oxide and/or the second metal oxide may be uniformly disposed on the core, thereby more effectively exhibiting withstand voltage characteristics and ionic conductivity. The particle diameter of the first metal oxide and/or the second metal oxide may be measured, for example, through a measurement device utilizing a laser diffraction method or a dynamic light scattering method. In one or more embodiments, a particle diameter may be measured utilizing a laser scattering particle size distribution meter (for example, LA-920 manufactured by Horiba Corporation) and is a value of a median diameter (D50) if (e.g., when) metal oxide particles are accumulated to 50 % from small particles to large particles in volume conversion. A uniformity deviation of at least one selected from the first metal oxide and/or the second metal oxide may be 3 % or less, 2 % or less, or 1 % or less. Uniformity may be obtained, for example, through X-ray photoelectron spectroscopy (XPS). Accordingly, in one or more embodiments, at least one selected from the first metal oxide and the second metal oxide may have a uniformity deviation of 3 % or less, 2 % or less, or 1 % or less and may be uniformly distributed in a composite.

The second composite may include the first carbon-based material. In one or more embodiments, the first carbon-based material may have, for example, a branched structure, and at least one metal oxide selected from the first metal oxide and the second metal oxide may be distributed in the branched structure of the first carbon-based material. The branched structure of the first carbon-based material may include, for example, a plurality of first carbon-based material particles in contact with each other. Because the first carbon-based material has the branched structure, one or more suitable conducting paths may be provided. In some embodiments, the first carbon-based material may include, for example, graphene. Graphene may have, for example, a branched structure, and at least metal oxide selected from the first metal oxide and the second metal oxide may be distributed in the branched structure of graphene. The branched structure of graphene may include, for example, a plurality of graphene particles in contact with each other. Because graphene has the branched structure, one or more suitable conducting paths may be provided.

In one or more embodiments, the first carbon-based material may have, for example, a spherical structure (e.g., substantially spherical structure), and at least one metal oxide selected from the first metal oxide and the second metal oxide may be distributed in the spherical structure. The spherical structure of the first carbon-based material may have a size of about 50 nm to about 300 nm. The first carbon-based material having the spherical structure may be provided as a plurality of first carbon-based materials (e.g., plurality of first carbon-based material particles). Because the first carbon-based material has the spherical structure, the second composite may have a rigid structure. In some embodiments, the first carbon-based material may include, for example, graphene. Graphene may have, for example, a spherical structure, and at least one metal oxide selected from the first metal oxide and the second metal oxide may be distributed in the spherical structure. The spherical structure of graphene may have a size of about 50 nm to about 300 nm. Graphene having the spherical structure may be provided as a plurality of graphenes (or graphene particles or spherical structures). Because graphene has the spherical structure, the second composite may have a rigid structure.

In one or more embodiments, the first carbon-based material may have, for example, a spiral structure in which a plurality of spherical structures (e.g., substantially spherical structures) are connected, and at least one metal oxide selected from the first metal oxide and the second metal oxide may be distributed in the spherical structures of the spiral structure. The spiral structure of the first carbon-based material may have a size of about 500 nm to about 100 $\mu$m. Because the first carbon-based material has the spiral structure, the second composite may have a rigid structure. In some embodiments, the first carbon-based material may be, for example, graphene. Graphene may have, for example, a spiral structure in which a plurality of spherical structures (e.g., substantially spherical structures) are connected, and at least one metal oxide selected from the first metal oxide and the second metal oxide may be distributed in the spherical structures of the spiral structure. The spiral structure of graphene may have a size of about 500 nm to about 100 $\mu$m. Because graphene has the spiral structure, the second composite may have a rigid structure.

In one or more embodiments, the first carbon-based material may have for example, a cluster structure in which a plurality of spherical structures (e.g., substantially spherical structures) are aggregated, and at least one metal oxide selected from the first metal oxide and the second metal oxide may be distributed in the spherical structures of the cluster structure. The cluster structure of the first carbon-based material may have a size of about 0.5 mm to about 10 mm. Because the first carbon-based material has the cluster structure, the second composite may have a rigid structure. In some embodiments, the first carbon-based material may include, for example, graphene. Graphene may have, for example, a cluster structure in which a plurality of spherical structures (e.g., substantially spherical structures) are aggregated, and at least one metal oxide selected from the first metal oxide and the second metal oxide may be distributed in the spherical structures of the cluster structure. The cluster structure of graphene may have a size of about 0.5 mm to about 10 mm. Because graphene has the cluster structure, the second composite may have a rigid structure.

In one or more embodiments, the second composite may include, for example, a crumpled faceted-ball structure, and at least one selected from the first metal oxide and the second metal oxide may be distributed inside and/or on a surface of the crumpled faceted-ball structure. Because the second composite has such a crumpled faceted-ball structure, the second composite may be easily applied on an irregular surface (e.g., having an unevenness) of the core.

In one or more embodiments, the second composite may have for example, a planar structure, and at least one selected from the first metal oxide and the second metal oxide may be distributed inside and/or on a surface of the planar structure. Because the second composite is such a two-dimensional planar structure, the second composite may be easily applied on the irregular surface (e.g., having an unevenness) of the core.

In one or more embodiments, the first carbon-based material may extend from the first metal oxide by a distance of 10 nm or less and may include at least 1 to 20 carbon-based material layers. For example, in one or more embodiments, the first carbon-based material having a total thickness of 12 nm or less may be on (e.g., disposed on) the first metal oxide by stacking a plurality of first carbon-based material layers. For example, in some embodiments, the first carbon-based material may have a total thickness of about 0.6 nm to about 12 nm. In some embodiments, the first carbon-based material may include, for example, graphene. Graphene may extend from the first metal oxide by a distance of 10 nm or less and may include at least 1 to 20 graphene layers. For example, a plurality of graphene layers may be stacked to arrange graphene having a total thickness of 12 nm or less on the first metal oxide. For example, graphene may have a total thickness of about 0.6 nm to about 12 nm.

The composite positive electrode active material may include the core, and the core may include, for example, a lithium transition metal oxide represented by a formula selected from Formulas 1 to 5.

**Formula 1**     $Li_aNi_xCo_yM_zO_{2-b}A_b$

In Formula 1, $1.0 \leq a \leq 1.2$, $0 \leq b \leq 0.2$, $0.8 \leq x < 1$, $0 \leq y \leq 0.3$, $0 < z \leq 0.3$, $x+y+z=1$, M may be manganese (Mn), niobium (Nb), vanadium (V), magnesium (Mg), gallium (Ga), silicon (Si), tungsten (W), molybdenum (Mo), iron (Fe), chromium (Cr) ), copper (Cu), zinc (Zn), titanium (Ti), aluminum (Al), boron (B), or a combination thereof, and

A may be fluorine (F), sulfur (S), chlorine (Cl), bromine (Br), or a combination thereof.

$$\text{Formula 2} \qquad LiNi_xCo_yMn_zO_2$$

$$\text{Formula 3} \qquad LiNi_xCo_yAl_zO_2$$

In Formula 2 and Formula 3, $0.8 \leq x \leq 0.95$, $0 \leq y \leq 0.2$, $0 < z \leq 0.2$, and $x+y+z=1$.

$$\text{Formula 4} \qquad LiNi_xCo_yMn_zAl_wO_2$$

In Formula 4, $0.8 \leq x \leq 0.95$, $0 \leq y \leq 0.2$, $0 < z \leq 0.2$, $0 < w \leq 0.2$, and $x+y+z+w=1$.

$$\text{Formula 5} \qquad Li_aNi_xMn_yM'_zO_{2-b}A_b$$

In Formula 5, $1.0 \leq a \leq 1.2$, $0 \leq b \leq 0.2$, $0.8 \leq x < 1$, $0 < y \leq 0.2$, $0 \leq z \leq 0.2$, $x+y+z=1$, M' may be niobium (Nb), vanadium (V), magnesium (Mg), gallium (Ga), silicon (Si), tungsten (W), molybdenum (Mo), iron (Fe), chromium (Cr), copper ( Cu), zinc (Zn), titanium (Ti), aluminum (Al), boron (B), or a combination thereof, and A may be F, S, Cl, Br, or a combination thereof.

In one or more embodiments, the composite positive electrode active material may include, for example, a first composite positive electrode active material (e.g., in the form of particles) and a second composite positive electrode active material (e.g., in the form of particles), and the first composite positive electrode active material and the second composite positive electrode active material may have different particle diameters. The first composite positive electrode active material may be a large-diameter composite positive electrode active material having a larger particle diameter than the second composite positive electrode active material. The second composite positive electrode active material may be a small-diameter composite positive electrode active material having a smaller particle diameter than the first composite positive electrode active material. For example, in a pore between the first composite positive electrode active materials, a second composite positive electrode active material having a smaller particle diameter than the first composite positive electrode active material may be disposed. Second composite positive electrode active material particles which are small-diameter particles may be disposed in pores between first composite positive electrode active material particles which are large-diameter particles, thereby improving ionic conductivity and/or electronic conductivity of a positive electrode including the composite positive electrode active material. In one or more embodiments, the energy density of the positive electrode including the composite positive electrode active material may be improved. As a result, it may improve the energy density of an all-solid secondary battery including the composite positive electrode active material and improve the cycle characteristics thereof.

In one or more embodiments, the first composite positive electrode active material may include, for example, secondary particles in which a plurality of primary particles are aggregated or may include primary particles having a particle size of 1 $\mu$m or more. The second composite positive electrode active material may include, for example, secondary particles in which a plurality of primary particles are aggregated or primary particles having a particle size of 1 $\mu$m or more. The first composite positive electrode active material and the second composite positive electrode active material may each independently include, for example, secondary particles in which a plurality of primary particles are aggregated. In one or more embodiments, The first composite positive electrode active material and the second composite positive electrode active material may each independently include, for example, a core including secondary particles in which a plurality of primary particles are aggregated, and a shell on (e.g., disposed on) a surface of the core. The primary particles constituting the secondary particles may have, for example, a size of less than 1 $\mu$m. In some embodiments, the primary particles constituting the secondary particles may have, for example, a size of about 10 nm to about 700 nm, about 50 nm to about 500 nm, or about 100 nm to about 300 nm. In one or more embodiments, the first composite positive electrode active material and the second composite positive electrode active material may each independently include, for example, a core including primary particles having a particle diameter of 1 $\mu$m or more, and a shell on (e.g., disposed on) a surface of the core. The primary particle having a particle diameter of 1 $\mu$m or more may be, for example, a one-body particle. The one-body particle may have, for example, a particle diameter of about 1 $\mu$m to about 7 $\mu$m, about 1 $\mu$m to about 5 $\mu$m, or about 1 $\mu$m to about 3 $\mu$m.

For example, in one or more embodiments, the first composite positive electrode active material and the second composite positive electrode active material may have a bimodal particle size distribution in a particle size distribution. For example, the composite positive electrode active material may have a bimodal particle size distribution having two peaks in a particle size distribution obtained utilizing a particle size analyzer (PSA) and/or the like. The bimodal particle size distribution may have a first peak corresponding to the first composite positive electrode active material and a second peak corresponding to the second composite positive electrode active material.

A particle diameter ratio of the first composite positive electrode active material to the second composite positive electrode active material may be, for example, in a range of about 3:1 to about 40:1, about 3:1 to about 30:1, about 3:1 to about 20:1, about 3:1 to about 10:1, or about 3:1 to about 5:1. Because the first composite positive electrode active material and the second composite positive electrode active material have a particle diameter ratio in such a range, it may further improve the energy density and cycle characteristics of a lithium battery including the composite positive electrode active material.

In one or more embodiments, the first composite positive electrode active material may have, for example, a particle diameter of equal to or greater than about 8 $\mu$m to about 30 $\mu$m, about 9 $\mu$m to about 25 $\mu$m, about 9 $\mu$m to about 20 $\mu$m, about 9 $\mu$m to about 15 $\mu$m, or about 9 $\mu$m to about 12 $\mu$m. The particle diameter of the first composite positive electrode active material may be, for example, a median particle diameter (D50). The second composite positive electrode active material may have, for example, a particle diameter of about 1 $\mu$m to less than about 8 $\mu$m, about 1 $\mu$m to about 7 $\mu$m, about 1 $\mu$m to about 6 $\mu$m, about 1 $\mu$m to about 5 $\mu$m, or about 1 $\mu$m to about 4 $\mu$m. The particle diameter of the second composite positive electrode active material may be, for example, a median particle diameter (D50). Because the first composite positive electrode active material and the second composite positive electrode active material have average particle diameters in such ranges, it may further improve the energy density and/or cycle characteristics of a lithium battery including the composite positive electrode active material. The particle diameters of the first composite positive electrode active material and the second composite positive electrode active material may be measured, for example, through a measurement device utilizing a laser diffraction method or a dynamic light scattering method. A particle diameter may be measured utilizing a laser scattering particle size distribution meter (for example, LA-920 manufactured by Horiba Corporation) and may be a value of a median diameter (D50) if (e.g., when) composite positive electrode active particles are accumulated to 50 % from small particles to large particles in volume conversion.

A weight ratio of the first composite positive electrode active material to the second composite positive electrode active material may be, for example, in a range of about 90:10 to about 60:40, about 85:15 to about 65:35, about 80:20 to about 65:35, or about 75:25 to about 65:35. Because the first composite positive electrode active material and the second composite positive electrode active material have a weight ratio in such a range, it may further improve the energy density and/or cycle characteristics of a lithium battery including the composite positive electrode active material.

**Positive electrode: solid electrolyte**

In one or more embodiments, the positive electrode active material layer may include a sulfide-based solid electrolyte. The sulfide-based solid electrolyte may include, for example, a crystalline sulfide-based solid electrolyte, an amorphous sulfide-based solid electrolyte, a glassy sulfide-based solid electrolyte, a glass ceramic sulfide-based solid electrolyte, or a combination thereof. A structure of the sulfide-based solid electrolyte may be selected according to the required performance of an all-solid secondary battery. The sulfide-based solid electrolyte may be, for example, crystalline or amorphous.

The sulfide-based solid electrolyte may include, for example, at least one selected from $Li_2S$-$P_2S_5$, $Li_2S$-$P_2S_5$-LiX (wherein X is a halogen element), $Li_2S$-$P_2S_5$-$Li_2O$, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (wherein m and n are each a positive number and Z is one selected from Ge, Zn, and Ga), $Li_2S$-$GeS_2$, $Li_2S$-$SiS_2$-$Li_3PO_4$, $Li_2S$-$SiS_2$-$Li_pMO_q$ (wherein p and q are each a positive number and M is one selected from P, Si, Ge, B, Al, Ga, and In), $Li_{7-x}PS_{6-x}Cl_x$ (wherein $0 \leq x \leq 2$), $Li_{7-x}PS_{6-x}Br_x$ (wherein $0 \leq x \leq 2$), and $Li_{7-x}PS_{6-x}I_x$ (wherein $0 \leq x \leq 2$). The sulfide-based solid electrolyte may be prepared by treating a starting material such as $Li_2S$ or $P_2S_5$ through melt quenching or mechanical milling. In some embodiments, after such treating, heat treatment may be performed. A solid electrolyte may be in an amorphous state, a crystalline state, or a mixture state thereof. In some embodiments, the solid electrolyte may be, for example, a material that includes at least sulfur (S), phosphorus (P), and lithium (Li) as constituent elements among the above-described materials of the sulfide-based solid electrolyte. For example, the solid electrolyte may be a material including $Li_2S$-$P_2S_5$. If (e.g., when) a material including $Li_2S$-$P_2S_5$ is utilized as a sulfide-based solid electrolyte material for forming a solid electrolyte, a mixing molar ratio of $Li_2S$ to $P_2S_5$, for example, $Li_2S$:$P_2S_5$ may be in a range of about 50:50 to about 90:10.

In one or more embodiments, the sulfide-based solid electrolyte may include, for example, an argyrodite-type or kind solid electrolyte (e.g., an argyrodite solid electrolyte) represented by Formula 1.

Formula 1 $\qquad$ $Li^+{}_{12-n-x}A^{n+}X^{2-}{}_{6-x}Y^-{}_x$

In Formula 1, A may be P, As, Ge, Ga, Sb, Si, Sn, Al, In, Ti, V, Nb, or Ta, X may be S, Se, or Te, Y may be Cl, Br, I, F, CN, OCN, SCN, or $N_3$, $1 \leq n \leq 5$, and $0 \leq x \leq 2$. In some embodiments, the sulfide-based solid electrolyte may be, for example, an argyrodite-type or kind compound including at least one selected from $Li_{7-x}PS_{6-x}Cl_x$ (wherein $0 \leq x \leq 2$),

$Li_{7-x}PS_{6-x}Br_x$ (wherein $0 \leq x \leq 2$), and $Li_{7-x}PS_{6-x}I_x$ (wherein $0 \leq x \leq 2$). In some embodiments, the sulfide-based solid electrolyte may be, for example, an argyrodite-type or kind compound including at least one selected from $Li_6PS_5Cl$, $Li_6PS_5Br$, and LisPSsl.

The argyrodite-type or kind solid electrolyte may have a density of about 1.5 g/cc to about 2.0 g/cc. Because the argyrodite-type or kind solid electrolyte has a density of 1.5 g/cc or more, it may reduce internal resistance of an all-solid secondary battery and effectively suppress or reduce Li from penetrating a solid electrolyte layer.

A form of the sulfide-based solid electrolyte may be, for example, a particle form. Because the sulfide-based solid electrolyte has the particle form, the sulfide-based solid electrolyte may be easily mixed with composite positive electrode active material particles.

In one or more embodiments, the sulfide-based solid electrolyte may include, for example, a first sulfide-based solid electrolyte (e.g., in the form of particles) and a second sulfide-based solid electrolyte (e.g., in the form of particles). For example, the first sulfide-based solid electrolyte and the second sulfide-based solid electrolyte may have different particle diameters. Because the sulfide-based solid electrolyte includes the first sulfide-based solid electrolyte and the second sulfide-based solid electrolyte having different particle diameters, the sulfide-based solid electrolyte may be more densely disposed between the composite positive electrode active material particles, thereby further improving ionic conductivity of a positive electrode. The first sulfide-based solid electrolyte may be, for example, a large-diameter sulfide-based solid electrolyte having a larger particle diameter than the second sulfide-based solid electrolyte, and the second sulfide-based solid electrolyte may be, for example, a small-diameter sulfide-based solid electrolyte having a smaller particle diameter than the first sulfide-based solid electrolyte. In a particle size distribution of the sulfide-based solid electrolyte, for example, the sulfide-based solid electrolyte may have a bimodal particle size distribution having a first peak corresponding to the first sulfide-based solid electrolyte and a second peak corresponding to the second sulfide-based solid electrolyte. A particle diameter ratio of the first sulfide-based solid electrolyte to the second sulfide-based solid electrolyte may be in a range of about 2:1 to about 10:1, about 2:1 to about 6:1, or about 2:1 to about 4:1. Because the first sulfide-based solid electrolyte and the second sulfide-based solid electrolyte have a particle size ratio in such a range, it may further improve ionic conductivity of a positive electrode including the sulfide-based solid electrolyte. The first sulfide-based solid electrolyte may have, for example, a particle diameter of about 1 $\mu$m to about 10 $\mu$m, about 2 $\mu$m to about 6 $\mu$m, or about 2 $\mu$m to about 4 $\mu$m. The second sulfide-based solid electrolyte may have, for example, a particle diameter of about 1 $\mu$m to about 2 $\mu$m, about 0.5 $\mu$m to about 2 $\mu$m, or about 0.5 $\mu$m to about 1,5 $\mu$m. Because the first sulfide-based solid electrolyte and the second sulfide-based solid electrolyte each have a particle diameter such a range, the first sulfide-based solid electrolyte and the second sulfide-based solid electrolyte may densely fill in the positive electrode active material layer. Accordingly, it may further improve ionic conductivity of a positive electrode including the sulfide-based solid electrolyte. A weight ratio of the first sulfide-based solid electrolyte to the second sulfide-based solid electrolyte may be in a range of about 50:50 to about 90:10, about 60:40 to about 80:20, or about 70:30 to about 80:20. Because the first sulfide-based solid electrolyte and the second sulfide-based solid electrolyte have a weight ratio in such a range, the first sulfide-based solid electrolyte and the second sulfide-based solid electrolyte may densely fill the positive electrode active material layer. Accordingly, it may further improve ionic conductivity of a positive electrode including the sulfide-based solid electrolyte.

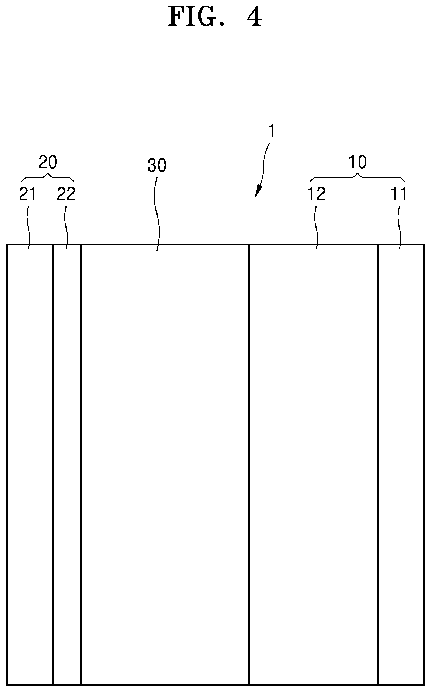

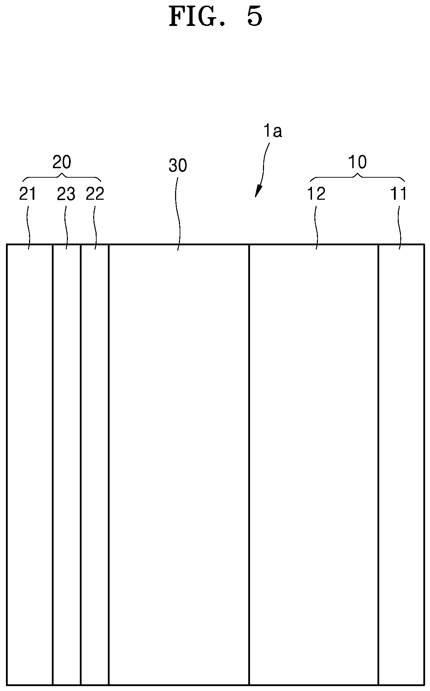

In one or more embodiments, the solid electrolyte included in the positive electrode active material layer 12 may have a smaller particle diameter than a solid electrolyte included in a solid electrolyte layer 30 (e.g., referring to FIG. 4 and FIG. 5). For example, in some embodiments, a particle diameter of a solid electrolyte included in the positive electrode active material layer 12 may be less than 100 %, 99 % or less, 95 % or less, 90 % or less, 80 % or less, 70 % or less, 60 % or less, 50 % or less, 40 % or less, 30 % or less, or 20 % or less of a particle diameter of a solid electrolyte included in the solid electrolyte layer 30.

**Positive electrode: binder**

In one or more embodiments, the positive electrode active material layer 12 may further include a binder. The binder may include, for example, styrene-butadiene rubber (SBR), polytetrafluoroethylene, polyvinylidene fluoride, polyethylene, and/or the like, but embodiments of the present disclosure are not necessarily limited thereto. Any material utilized as a binder in the art may be utilized. In some embodiments, the binder may include, for example, a fluorine-based binder. The fluorine-based binder may be a binder including fluorine. The fluorine-based binder may include, for example, polytetrafluoroethylene, polyvinylidene fluoride, and/or the like. In some embodiments, the binder may not be provided.

**Positive electrode: conductive material**

In one or more embodiments, the positive electrode active material layer 12 may further include a conductive material. The conductive material may include a fibrous conductive material, a particulate conductive material, or a combination thereof. The conductive material may include, for example, graphite, carbon black (CB), acetylene black (AB), Ketjen black (KB), a carbon fiber, carbon nanotubes, carbon nanofibers, a metal powder, and/or the like, but embodiments of the present disclosure are not necessarily limited thereto. Any material utilized as a conductive material in the art may be utilized. In some embodiments, the conductive material may not be provided.

**Positive electrode: other additives**

In addition to the above-described composite positive electrode active material and solid electrolyte, in one or more embodiments, the positive electrode active material layer 12 may further include, for example, one or more additives such as a filler, a coating agent, a dispersant, and an ion-conductive adjuvant.

As the filler, the coating agent, the dispersant, and the ion-conductive adjuvant that may be included in the positive electrode active material layer 12, suitable materials commonly utilized in an electrode of an all-solid secondary battery may be utilized.

**Positive electrode: positive electrode current collector**

The positive electrode current collector 11 may include a plate, a foil, and/or the like made of, for example, indium (In), copper (Cu), magnesium (Mg), stainless steel, titanium (Ti), iron (Fe), cobalt (Co), nickel (Ni), zinc (Zn), aluminum (Al), germanium ( Ge), lithium (Li), or an alloy thereof. In some embodiments, the positive electrode current collector 11 may not be provided. The positive electrode current collector 11 may have, for example, a thickness of about 1 $\mu$m to about 100 $\mu$m, about 1 $\mu$m to about 50 $\mu$m, about 5 $\mu$m to about 25 $\mu$m, or about 10 $\mu$m to about 20 $\mu$m. In one or more embodiments, the positive electrode current collector may include, for example, a base film and a metal layer on (e.g., disposed on) one side or both (e.g., opposite) sides of the base film. The base film may include, for example, a polymer. The polymer may be, for example, a thermoplastic polymer. The polymer may be, for example, polyethyleneterephtalate (PET), polyethylene (PE), polyprolylene (PP), polybutyleneterephthalate (PBT), polyimide (PI), or any combination thereof. In some embodiments, the polymer may be an insulator. Because the base film includes an insulating thermoplastic polymer, the base film is softened or liquefied to block or reduce the operation of a battery in the case of occurrence of a short circuit, so that a rapid current increase may be inhibited. The metal layer may include, for example, indium (In), copper (Cu), magnesium (Mg), stainless steel, titanium (Ti), iron (Fe), cobalt (Co), nickel (Ni), zinc (Zn), aluminum (Al), germanium (Ge), or any alloy thereof. The metal layer acts as an electrochemical fuse and is cut by an overcurrent, thereby preventing or reducing a short circuit. By controlling a thickness of the metal layer, a limiting current and a maximum current may be adjusted. The metal layer may be plated or deposited on the base film. As the thickness of the metal layer decreases, the limiting current and/or maximum current of the positive electrode current collector decrease, so that stability of the lithium battery may be improved in the case of a short circuit. In some embodiments, a lead tab may be added onto the metal layer for connection with the outside. The lead tab may be welded to the metal layer or a metal layer/base film stack structure by ultrasonic welding, laser welding, spot welding, and/or the like. While the base film and/or the metal layer melts during welding, the metal layer may be electrically connected to the lead tab. In some embodiments, a metal chip may further be added between the metal layer and the lead tab for stronger welding between the metal layer and the lead tab. The metal chip may be a chip of the same material as the metal of the metal layer. The metal chip may be, for example, metal foil and metal mesh. The metal chip may be, for example, aluminum foil, copper foil, and SUS foil. By performing welding after disposing the metal chip on the metal layer, the lead tab may be welded to the metal chip/metal layer stack structure or the metal chip/metal layer/base film stack structure. While the base film, the metal layer, and/or the metal chip melt during welding, the metal layer or metal layer/metal chip stack structure may be electrically connected to the lead tab. In some embodiments, a metal chip and/or a lead tab may further be added to the metal layer. In one or more embodiments, the base film may have a thickness of, for example, 1 $\mu$m to 50 $\mu$m, 1.5 $\mu$m to 50 $\mu$m, 1.5 $\mu$m to 40 $\mu$m, or 1 to 30 $\mu$m. With the thickness of the base film within the above-described ranges, the weight of the electrode assembly may be more effectively reduced. A melting point of the base film may be, for example, from 100 °C to 300 °C, from 100 °C to 250 °C, or from 100 °C to 200 °C. Because the base film has a melting point within the above-described ranges, the base film melts during a process of welding the lead tab to be easily bound to the lead tab. In some embodiments, to improve adhesion between the base film and the metal layer, surface treatment such as corona treatment may be performed on the base film. In one or more embodiments, a thickness of the metal layer may be, for example, from 0.01 $\mu$m to 3 $\mu$m, from 0.1 $\mu$m to 3 $\mu$m, from 0.1 $\mu$m to 2 $\mu$m, or from 0.1 $\mu$m to 1 $\mu$m. With the thickness of the metal layer within the above-described ranges, stability of the electrode assembly may be obtained while maintaining conductivity thereof. In some embodiments, a thickness of the metal chip may be, for example, from 2 $\mu$m to 10 $\mu$m, from 2 $\mu$m to 7 $\mu$m, or from 4 $\mu$m to 6 $\mu$m. With the thickness of the metal chip within the above-described ranges, the metal layer may be more easily connected to the lead tab. Because the positive electrode current collector has the above-described structure, the weight of the positive electrode may be reduced, so that energy density of the positive electrode and the lithium battery may be increased.

**All-solid secondary battery**

In one or more embodiments, an all-solid secondary battery may include a positive electrode, a negative electrode, and an electrolyte layer between the positive electrode and the negative electrode. The electrolyte layer may include an electrolyte. The electrolyte may include, for example, a solid electrolyte, a gel electrolyte, or a combination thereof.

Referring to FIG. 4 and 5, an all-solid secondary battery 1 according to one or more embodiments may include the above-described positive electrode 10, a negative electrode 20, and a solid electrolyte layer 30 between the positive electrode 10 and the negative electrode 20.

Because the all-solid secondary battery 1 includes the above-described positive electrode 10, it may improve the cycle characteristics of the all-solid secondary battery 1.

**Solid electrolyte layer**

**Solid electrolyte layer: solid Electrolyte**

The solid electrolyte layer 30 may include a solid electrolyte between the positive electrode 10 and the negative electrode 20. The solid electrolyte may be, for example, a sulfide-based solid electrolyte, an oxide-based solid electrolyte, a polymer solid electrolyte, or any combination thereof.

In one or more embodiments, the solid electrolyte included in the solid electrolyte layer 30, for example, may be one or more selected from sulfide-based solid electrolytes included in the above-described positive electrode. For specific details of the sulfide-based solid electrolyte, the above-described positive electrode is referred to. In some embodiments, the solid electrolyte layer 30 may include an oxide-based solid electrolyte. The oxide-based solid electrolyte may include, for example, at least one selected from $Li_{1+x+y}Al_xTi_{2-x}Si_yP_{3-y}O_{12}$ (wherein $0<x<2$ and $0\leq y<3$), $BaTiO_3$, $Pb(Zr,Ti)O_3$ (PZT), $Pb_{1-x}La_xZr_{1-y}Ti_yO_3$ (PLZT) (wherein $0\leq x<1$ and $0\leq y<1$), $Pb(Mg_3Nb_{2/3})O_3-PbTiO_3$ (PMN-PT), $HfO_2$, $SrTiO_3$, $SnO_2$, $CeO_2$, $Na_2O$, $MgO$, $NiO$, $CaO$, $BaO$, $ZnO$, $ZrO_2$, $Y_2O_3$, $Al_2O_3$, $TiO_2$, $SiO_2$, $Li_3PO_4$, $Li_xTi_y(PO_4)_3$ (wherein $0<x<2$ and $0<y<3$), $Li_xAl_yTi_z(PO_4)_3$ (wherein $0<x<2$, $0<y<1$, and $0<z<3$), $Li_{1+x+y}(Al, Ga)_x(Ti, Ge)_{2-x}Si_yP_{3-y}O_{12}$ (wherein $0\leq x\leq 1$ and $0\leq y\leq 1$ ), $Li_xLa_yTiO_3$ (wherein $0<x<2$ and $0<y<3$), $Li_2O$, $LiOH$, $Li_2CO_3$, $LiAlO_2$, $Li_2O-Al_2O_3-SiO_2-P_2O_5-TiO_2-GeO_2$, and $Li_{3+x}La_3M_2O_{12}$ (wherein M=Te, Nb, or Zr and $0\leq x\leq 10$). The solid electrolyte may be manufactured by a sintering method, and/or the like. For example, in some embodiments, the oxide-based solid electrolyte may be a garnet-type or kind solid electrolyte selected from $Li_7La_3Zr_2O_{12}$ (LLZO) and $Li_{3+x}La_3Zr_{2-a}M_aO_{12}$ (M doped LLZO) (wherein M=Ga, W, Nb, Ta, or Al, $0<a<2$, and $0\leq x\leq 10$). The solid electrolyte included in the solid electrolyte layer 30 may have a larger particle diameter than a solid electrolyte included in the positive electrode active material layer 12. For example, in some embodiments, a particle diameter of the solid electrolyte included in the solid electrolyte layer 30 may be greater than 100 %, 101 % or more, 105 % or more, 110 % or more, 120 % or more, 130 % or more, 140% or more, 150% or more, 200 % or more, 300 % or more, or 400 % or more of a particle diameter of the solid electrolyte included in the positive electrode active material layer 12. In one or more embodiments, the solid electrolyte layer (30) may include, for example, a polymer solid electrolyte. The polymer solid electrolyte may include, for example, a mixture of a lithium salt and a polymer or a polymer having an ion-conductive functional group. The polymer solid electrolyte may be, for example, a polymer electrolyte in a solid state at 25 °C and 1 atm. For example, the polymer solid electrolyte may not include (e.g., may exclude) any liquid. In one or more embodiments, the polymer solid electrolyte may include a polymer, and non-limiting examples of the polymer may include polyethyleneoxide (PEO), polyvinylidenefluoride (PVDF), vinylidene fluoride-hexafluoropropylene (PVDF-HFP), poly(styrene-b-ethylene oxide) block copolymer (PS-PEO), poly(styrene-butadiene), poly(styrene-isoprene-styrene), poly(styrene-b-divinylbenzene) block copolymer, poly(styrene-ethylene oxide-styrene) block copolymer, polystyrene sulfonate (PSS), polyvinyl fluoride (PVF), poly(methylmethacrylate) (PMMA), polyethylene glycol (PEG), polyacrylonitrile (PAN), polytetrafluoroethylene (PTFE), polyethylenedioxythiophene (PEDOT), polypyrrole (PPY), polyaniline, polyacetylene, Nafion, Aquivion, Flemion, Gore, Aciplex, Morgane ADP), sulfonated poly(ether ether ketone) (SPEEK), sulfonated poly(arylene ether ketone ketone sulfone) (SPAEKKS), sulfonated poly(aryl ether ketone (SPAEK), poly[bis(benzimidazobenzisoquinolinones)] (SPBIBI), poly(styrene sulfonate) (PSS), lithium 9,10-diphenylanthracene-2-sulfonate (DPASLi+), or any combination thereof. However, embodiments of the present disclosure are not limited thereto, and any polymer electrolytes commonly available in the art may also be utilized. Any lithium salts commonly available in the art may also be utilized. Non-limiting examples of the lithium salt may include $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x}+1SO_2)(C_yF_{2y}+1SO_2)$ (wherein x and y may each independently be in a range of 1 to 20), $LiCl$, $LiI$, or any mixture thereof. The polymer included in the polymer solid electrolyte may be, for example, a compound including 10 or more, 20 or more, 50 or more, or 100 or more repeating units. A weight average molecular weight of the polymer included in the polymer solid electrolyte may be, for example, 1000 Dalton (Da) or more, 10,000 Da or more, 100,000 Da or more, or 1,000,000 Da or more. In one or more embodiments, the solid electrolyte layer (30) may include, for example, a gel electrolyte. In some embodiments, the gel electrolyte may be, for example, a polymer gel electrolyte. In some embodiments, for example, the gel electrolyte may have a gel state without including a polymer. In some embodiments, the polymer gel electrolyte may include, for example, a liquid electrolyte and a polymer, or an organic solvent and a polymer having an ion-conductive functional group. The polymer gel electrolyte may be, for example, a polymer electrolyte in a gel state at 25 °C and 1 atm. In some embodiments, the polymer gel electrolyte may have, for example, a gel state without including a (e.g., any) liquid. The liquid electrolyte utilized in the polymer gel electrolyte may be, for example, a mixture of an ionic liquid, a lithium salt, and an organic solvent; a mixture of a lithium salt and an organic solvent; a mixture of an ionic liquid and an organic solvent; or a mixture of a lithium salt, an ionic liquid, and an organic solvent. In one or more embodiments, the polymer utilized in the polymer gel electrolyte may be one or more selected from polymers utilized in the polymer solid electrolyte. The organic solvent may be one or more selected from organic solvents utilized in liquid electrolytes. The lithium salt may be one or more selected from lithium salts utilized in the polymer solid electrolyte. The ionic liquid refers to a salt in a liquid state, and a molten salt at room temperature composed solely of ions and having a melting point below room temperature. The ionic liquid may include, for example, at least one compound including a) at least one cation selected from ammonium, pyrimidium, pyridinium, pyrimidium, imidazolium, piperidinium, pyrazolium, oxazolium, pyridazinium, phosphonium, sulfonium, triazole, and any mixture thereof, and b) at least one anion selected from $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$; $Cl^-$, $Br^-$, $I^-$, $SO_4^-$, $CF_3SO_3^-$, $(FSO_2)_2N^-$, $(C_2F_5SO_2)_2N^-$, $(C_2F_5SO_2)(CF_3SO_2)N^-$, and $(CF_3SO_2)_2N^-$. For example, in some embodiments, the polymer solid electrolyte may be impregnated with a liquid electrolyte in a secondary battery to form a polymer gel electrolyte. In some embodiments, the polymer gel electrolyte may further include inorganic particles. The polymer included in the polymer gel electrolyte may be a compound including, for example, 10 or more, 20 or more, 50 or more, or 100 or more repeating units. A weight average molecular weight of the polymer included in the polymer gel electrolyte may be, for example, 500 Da or more, 1000 Da or more, 10,000 Da or more, 100,000 Da or more, or 1,000,000 Da or more.

**Solid electrolyte layer: binder**

In one or more embodiments, the solid electrolyte layer 30 may include, for example, a binder. The binder of the solid electrolyte layer 30 may include, for example, styrene-butadiene rubber (SBR), polytetrafluoroethylene, polyvinylidene fluoride, polyethylene, and/or the like, but embodiments of the present disclosure are not limited thereto. Any material utilized as a binder in the art may be utilized. The binder of the solid electrolyte layer 30 may be the same as or different from binders included in the positive electrode active material layer 12 and a first negative electrode active material layer 22. In some embodiments, the binder may not be provided. A content (e.g., amount) of the binder included in the solid electrolyte layer 30 may be, for example, in a range of about 0 wt% to about 10 wt%, about 0 wt% to about 5 wt%, about 0 wt% to about 3 wt%, about 0 wt% to about 1 wt%, about 0 wt% to about 0.5 wt%, or about 0 wt% to 0.1 wt% with respect to the total weight of the solid electrolyte layer 30.

**Negative electrode**

**Negative electrode: negative electrode active material**

In one or more embodiments, the negative electrode 20 may include a negative electrode current collector 21 and a first negative electrode active material layer 22 on the negative electrode current collector 21. the first negative electrode active material layer 22 may include, for example, a negative electrode active material and a binder.
The negative electrode active material included in the first negative electrode active material layer 22 may have, for example, a particle form. The negative electrode active material having a particle form may have, for example, an average particle diameter of 4 $\mu$m or less, 3 $\mu$m or less, 2 $\mu$m or less, 1 $\mu$m or less, or 900 nm or less. In some embodiments, the negative electrode active material having a particle form may have, for example, an average particle diameter of about 10 nm to 4 $\mu$m, about 10 nm to about 3 $\mu$m, about 10 nm to about 2 $\mu$m, about 10 nm to about 1 $\mu$m, or about 10 nm to about 900 nm. Because the negative electrode active material has an average particle diameter in such a range, reversible absorbing and/or desorbing of lithium may be more easily performed during charging/discharging. The average particle diameter of the negative electrode active material is, for example, a median diameter (D50) measured utilizing a laser type or kind particle size distribution meter.
In one or more embodiments, the negative electrode active material included in the first negative electrode active material layer 22 may include, for example, at least one selected from a carbon-based negative electrode active material and a metal or metalloid negative electrode active material.
The carbon-based negative electrode active material may be amorphous carbon. Examples of the amorphous carbon may include CB, AB, furnace black (FB), KB, graphene, and/or the like, but embodiments of the present disclosure are not necessarily limited thereto. Any material classified as amorphous carbon in the art may be utilized. The amorphous carbon may be carbon that has no crystallinity or very low crystallinity and may be distinguished from crystalline carbon or graphite-based carbon.

The metal or metalloid negative electrode active material may include at least one selected from gold (Au), platinum (Pt), palladium (Pd), silicon (Si), silver (Ag), aluminum (Al), bismuth (Bi), tin (Sn), and zinc (Zn), but embodiments of the present disclosure are not necessarily limited thereto. Any material, which is utilized as a metal negative electrode active material or a metalloid negative electrode active material and forms an alloy or compound with lithium in the art, may be utilized. For example, nickel (Ni) does not form an alloy with lithium and thus is not a metal negative electrode active material.

The first negative electrode active material layer 22 may include one type or kind of negative electrode active material among such negative electrode active materials or a mixture of a plurality of different negative electrode active materials. For example, in some embodiments, the first negative electrode active material layer 22 may include only amorphous carbon or may include at least one selected from gold (Au), platinum (Pt), palladium (Pd), silicon (Si), silver (Ag), aluminum (Al), bismuth (Bi), tin (Sn), and zinc (Zn). In some embodiments, the first negative electrode active material layer 22 may include a mixture of amorphous carbon and at least one selected from gold (Au), platinum (Pt), palladium (Pd), silicon (Si), silver (Ag), aluminum (Al), bismuth (Bi), tin (Sn), and zinc (Zn). A mixing ratio of the mixture of amorphous carbon and gold and/or the like may be, for example, a weight ratio of about 10:1 to about 1:2, about 5:1 to about 1:1, or about 4:1 to about 2:1, but embodiments of the present disclosure are not necessarily limited to such a range. The mixing ratio may be selected according to the required characteristics of the all-solid secondary battery 1. Because the negative electrode active material has such a composition, it may further improve the cycle characteristics of the all-solid secondary battery 1.

In one or more embodiments, the negative electrode active material included in the first negative electrode active material layer 22 may include, for example, a mixture of first particles including amorphous carbon and second particles including a metal or metalloid. Examples of the metal or metalloid may include gold (Au), platinum (Pt), palladium (Pd), silicon (Si), silver (Ag), aluminum (Al), bismuth (Bi), tin (Sn), zinc (Zn), and/or the like. In some embodiments, the metalloid may be a semiconductor. A content (e.g., amount) of the second particles may be in a range of about 8 wt% to about 60 wt%, about 10 wt% to about 50 wt%, about 15 wt% to about 40 wt%, or about 20 wt% to about 30 wt% with respect to the total weight of the mixture. Because the second particles are included in a content (e.g., amount) in such a range, for example, the cycle characteristics of the all-solid secondary battery 1 may be further improved.

**Negative electrode: binder**

The binder included in the first negative electrode active material layer 22 may include, for example, SBR, polytetrafluoroethylene, polyvinylidene fluoride, polyethylene, a vinylidene fluoride/hexafluoropropylene copolymer, polyacrylonitrile, polymethyl methacrylate, and/or the like, but embodiments of the present disclosure are not necessarily limited thereto. Any material utilized as a binder in the art may be utilized. The binder may be provided as a single binder or a plurality of different binders.

Because the first negative electrode active material layer 22 includes the binder, the first negative electrode active material layer 22 may be stabilized on the negative electrode current collector 21. In some embodiments, despite changes in volume and/or relative position of the first negative electrode active material layer 22 during charging/discharging, the first negative electrode active material layer 22 may be suppressed or reduced from being cracked. For example, if (e.g., when) the first negative electrode active material layer 22 does not include a binder, the first negative electrode active material layer 22 may be easily separated from the negative electrode current collector 21 . At a portion of the negative electrode current collector 21 exposed by the first negative electrode active material layer 22 being separated from the negative electrode current collector 21, the negative electrode current collector 21 may be in contact with the solid electrolyte layer 30, and thus a possibility of a short circuit may increase. For example, in one or more embodiments, a slurry in which materials constituting the first negative electrode active material layer 22 are dispersed may be applied on the negative electrode current collector 21 and dried to prepare the first negative electrode active material layer 22. Because the binder is included in the first negative electrode active material layer 22, the negative electrode active material may be stably dispersed in the slurry. For example, if (e.g., when) the slurry is applied on the negative electrode current collector 21 through screen printing, it may suppress or reduce clogging of a screen (for example, clogging due to an aggregate of a negative electrode active material).

**Negative electrode: other additives**

In one or more embodiments, the first negative electrode active material layer 22 may further include, for example, one or more additives such as a filler, a coating agent, a dispersant, and an ion-conductive adjuvant which are included in an all-solid secondary battery 1 in the art.

**Negative electrode: first negative electrode active material layer**

In one or more embodiments, a thickness of the first negative electrode active material layer 22 may be, for example, 50 % or less, 40 % or less, 30 % or less, 20 % or less, 10 % or less, or 5% or less of a thickness of the positive electrode active material layer 12. In some embodiments, the first negative electrode active material layer 22 may have, for example, a thickness of about 1 $\mu$m to about 20 $\mu$m, about 2 $\mu$m to about 10 $\mu$m, or about 3 $\mu$m to about 7 $\mu$m. If (e.g., when) the first negative electrode active material layer 22 is excessively thin, lithium dendrites formed between the first negative electrode active material layer 22 and the negative electrode current collector 21 may collapse the first negative electrode active material layer 22, which may make it difficult to improve the cycle characteristics of the all-solid secondary battery 1. If (e.g., when) the thickness of the first negative electrode active material layer 22 is excessively increased, such as excessively thick, the energy density of the all-solid secondary battery 1 may decrease and the internal resistance of the all-solid secondary battery 1 due to the first negative electrode active material layer 22 may increase, which may make it is difficult to improve the cycle characteristics of the all-solid secondary battery 1.

If (e.g., when) the thickness of the first negative electrode active material layer 22 decreases, for example, charge capacity of the first negative electrode active material layer 22 may also decrease. In one or more embodiments, the charge capacity of the first negative electrode active material layer 22 may be, for example, 50 % or less, 40 % or less, 30 % or less, 20 % or less, 10 % or less, 5 % or less, or 2 % or less of charge capacity of the positive electrode active material layer 12. In some embodiments, the charge capacity of the first negative electrode active material layer 22 may be, for example, in a range of about 0.1 % to about 50 %, about 0.1 % to about 40 %, about 0.1 % to about 30 %, about 0.1 % to about 20 %, about 0.1 % to about 10 %, about 0.1 % to about 5 %, or about 0.1 % to about 2 % of the charge capacity of the positive electrode active material layer 12. If (e.g., when) the charge capacity of the first negative electrode active material layer 22 is excessively low, because the first negative electrode active material layer 22 becomes very thin, lithium dendrites formed between the first negative electrode active material layer 22 and the negative electrode current collector 21 during a repeated charging/discharging process may collapse the first negative electrode active material layer 22, which may make it difficult to improve the cycle characteristics of the all-solid secondary battery 1. If (e.g., when) the charge capacity of the first negative electrode active material layer 22 is excessively increased, such as excessively high, the energy density of the all-solid secondary battery 1 may decrease and the internal resistance of the all-solid secondary battery 1 due to the first negative electrode active material layer 22 may increase, which may make it difficult to improve the cycle characteristics of the all-solid secondary battery 1.

The charge capacity of the positive electrode active material layer 12 may be obtained by multiplying a charge capacity density (mAh/g) of a positive electrode active material by a mass of the positive electrode active material in the positive electrode active material layer 12. If (e.g., when) several types (kinds) of positive electrode active materials are utilized, a value of charge capacity density×mass is calculated for each positive electrode active material, and the sum of the values is the charge capacity of the positive electrode active material layer 12 . The charge capacity of the first negative electrode active material layer 22 may also be calculated in substantially the same manner. For example, the charge capacity of the first negative electrode active material layer 22 may be obtained by multiplying a charge capacity density (mAh/g) of the negative electrode active material by a mass of the negative electrode active material in the first negative electrode active material layer 22. If (e.g., when) several types (kinds) of negative electrode active materials are utilized, a value of charge capacity density×mass is calculated for each negative electrode active material, and the sum of the values is the charge capacity of the first negative electrode active material layer 22. Here, the charge capacity densities of the positive electrode active material and the negative electrode active material are respective capacities (i.e., capacity densities) estimated utilizing an all-solid half-cell utilizing a lithium metal as a counter electrode. Here, the charge capacities of the positive electrode active material layer 12 and the first negative electrode active material layer 22 are directly measured by measuring respective charge capacity utilizing an all-solid half-cell. If (e.g., when) the measured charge capacity is divided by a mass of each active material, a charge capacity density is obtained. In some embodiments, the charge capacities of the positive electrode active material layer 12 and the first negative electrode active material layer 22 may be initial charge capacity measured during charging of a first cycle.

**Negative electrode: second negative electrode active material layer**

In one or more embodiments, the all-solid secondary battery 1 may further include a second negative electrode active material layer disposed between the negative electrode current collector 21 and the first negative electrode active material layer 22, for example, by charging. The second negative electrode active material layer may be a metal layer including lithium or a lithium alloy. The metal layer may include lithium or a lithium alloy. Therefore, because the second negative electrode active material layer is the metal layer including lithium, the second negative electrode active material layer may serve as, for example, a lithium reservoir. Examples of the lithium alloy may include a Li-Al alloy, a Li-Sn alloy, a Li-In alloy, a Li-Ag alloy, a Li-Au alloy, a Li-Zn alloy, a Li-Ge alloy, a Li-Si alloy, and/or the like, but embodiments of the present disclosure are not limited thereto. Any material utilized as a lithium alloy in the art may be utilized. In some embodiments, the second negative electrode active material layer may be made of one of the alloys or lithium or may be made of several types (kinds) of alloys. In some embodiments, the second negative electrode active material layer may be, for example, a plated layer. The second negative electrode active material layer may be plated between the first negative electrode active material layer 22 and the negative electrode current collector 21. for example, during a charging process of the all-solid secondary battery 1.

The second negative electrode active material layer may have, for example, a thickness of about 1 $\mu$m to about 1,000 $\mu$m, about 1 $\mu$m to about 500 $\mu$m, about 1 $\mu$m to about 200 $\mu$m, about 1 $\mu$m to about 150 $\mu$m, about 1 $\mu$m to about 100 $\mu$m, or about 1 $\mu$m to about 50 $\mu$m, but embodiments of the present disclosure are not particularly limited thereto. If (e.g., when) the second negative electrode active material layer is excessively thin, it is difficult for the second negative electrode active material layer to serve as a lithium reservoir. If (e.g., when) the second negative electrode active material layer is excessively thick, a mass and volume of the all-solid secondary battery 1 may increase, and the cycle characteristics thereof may deteriorate. In some embodiments, the second negative electrode active material layer may be, for example, a metal foil having a thickness in such a range.

In the all-solid secondary battery 1, in some embodiments, the second negative electrode active material layer may be disposed between the negative electrode current collector 21 and the first negative electrode active material layer 22, for example, before the all-solid secondary battery 1 is assembled or may be plated between the negative electrode current collector 21 and the first negative electrode active material layer 22 by charging after the all-solid secondary battery 1 is assembled. If (e.g., when) the second negative electrode active material layer is disposed between the negative electrode current collector 21 and the first negative electrode active material layer 22 before the all-solid secondary battery 1 is assembled, the second negative electrode active material layer may be a metal layer including lithium and thus may serve as a lithium reservoir. For example, before the all-solid secondary battery 1 is assembled, a lithium foil may be disposed between the negative electrode current collector 21 and the first negative electrode active material layer 22. As a result, it may further improve the cycle characteristics of the all-solid secondary battery 1 including the second negative electrode active material layer. If (e.g., when) the second negative electrode active material layer is plated by charging after the all-solid secondary battery 1 is assembled, because the second negative electrode active material layer is not included when the all-solid secondary battery 1 is assembled, the energy density of the all-solid secondary battery 1 may increase. For example, during charging of the all-solid secondary battery 1, the first negative electrode active material layer 22 is charged beyond charge capacity of the first negative electrode active material layer 22. For example, the first negative electrode active material layer 22 is overcharged. At the beginning of charging, lithium is absorbed by the first negative electrode active material layer 22 . The negative electrode active material included in the first negative electrode active material layer 22 may form an alloy or compound with lithium ions transferred from the positive electrode 10. If (e.g., when) the first negative electrode active material layer 22 is charged beyond capacity of the first negative electrode active material layer 22, for example, lithium may be plated on a rear surface of the first negative electrode active material layer 22, that is, between the negative electrode current collector 21 and the first negative electrode active material layer 22, and a metal layer corresponding to the second negative electrode active material layer may be formed due to the plated lithium. The second negative electrode active material layer may be a metal layer mainly made of lithium (that is, metal lithium). Such a result is obtained if (e.g., when) the negative electrode active material included in the first negative electrode active material layer 22 includes, for example, a material forming an alloy or compound with lithium. During discharging, lithium in the first negative electrode active material layer 22 and the second negative electrode active material layer, that is, the metal layer, may be ionized to move toward the positive electrode 10. Therefore, lithium may be utilized as a negative electrode active material in the all-solid secondary battery 1. In some embodiments, because the first negative electrode active material layer 22 covers the second negative electrode active material layer, the first negative electrode active material layer 22 may serve as a protective layer for the second negative electrode active material layer, that is, a metal layer, and at the same time may suppress or reduce precipitation growth of lithium dendrites. Therefore, a short circuit and a decrease in capacity of the all-solid secondary battery 1 may be suppressed or reduced, and as a result, the cycle characteristics of the all-solid secondary battery 1 may be improved. In some embodiments, if (e.g., when) the second negative electrode active material layer is disposed by charging after the all-solid secondary battery 1 is assembled, the negative electrode current collector 21, the first negative electrode active material layer 22, a region therebetween may each be, for example, a Li-free region that does not include lithium (Li) in an initial state or a state after discharging of the all-solid secondary battery.

**Negative electrode: negative electrode current collector**

The negative electrode current collector 21 may be made of, for example, a material that does not (or does not substantially) react with lithium, that is, does not form both (e.g., simultaneously) an alloy and compound together with lithium. Examples of the material constituting the negative electrode current collector 21 may include copper (Cu), stainless steel, titanium (Ti), iron (Fe), cobalt (Co), nickel (Ni), and/or the like, but embodiments of the present disclosure are not necessarily limited thereto. Any material utilized as an electrode current collector in the art may be utilized. In some embodiments, the negative electrode current collector 21 may be made of, for example, one of the above-described metals or an alloy of two or more metals or a covering material. In some embodiments, the negative electrode current collector 21 may be, for example, in the form of a plate or foil.

In one or more embodiments, the all-solid secondary battery 1 may further include, for example, a thin film including an element capable of forming an alloy with lithium on the negative electrode current collector 21. The thin film may be disposed between the negative electrode current collector 21 and the first negative electrode active material layer 22. The thin film may include an element capable of forming an alloy with, for example, lithium. Examples of the element capable of forming an alloy with lithium may include gold, silver, zinc, tin, indium, silicon, aluminum, bismuth, and/or the like, but embodiments of the present disclosure are not necessarily limited thereto. Any element capable of forming an alloy with lithium in the art may be utilized. The thin film may be made of one of the metals or an alloy of several metals. Because the thin film is disposed on the negative electrode current collector 21, for example, a plated form of the second negative electrode active material layer plated between the thin film and the first negative electrode active material layer 22 may be further planarized, and the cycle characteristics of the all-solid secondary battery 1 may be further improved.

The thin film may have, for example, a thickness of about 1 nm to about 800 nm, about 10 nm to about 700 nm, about 50 nm to about 600 nm, or about 100 nm to about 500 nm. If (e.g., when) the thickness of the thin film is less than about 1 nm, it may be difficult to exhibit a function of the thin film. If (e.g., when) the thin film is excessively thick, the thin film itself may be to absorb lithium to reduce an amount of lithium plated at the negative electrode, which may reduce the energy density of the all-solid battery and may deteriorate the cycle characteristics of the all-solid secondary battery 1. The thin film may be disposed on the negative electrode current collector 21 through, for example, vacuum deposition, sputtering, plating, and/or the like, but embodiments of the present disclosure are not necessarily limited to such a method, Any method capable of forming a thin film in the art may be utilized.

In one or more embodiments, the negative electrode current collector 21 may include, for example, a base film and a metal layer on (e.g., disposed on) one side or both (e.g., opposite) sides of the base film. The base film may include, for example, a polymer. In some embodiments, the polymer may be, for example, a thermoplastic polymer. The polymer may be, for example, polyethyleneterephtalate (PET), polyethylene (PE), polyprolylene (PP), polybutyleneterephthalate (PBT), polyimide (PI), or any combination thereof. In some embodiments, the polymer may be an insulating polymer. Because the base film includes an insulating thermoplastic polymer, the base film is softened or liquefied to block or reduce the operation of a battery in the case of occurrence of a short circuit, so that a rapid current increase may be inhibited. The metal layer may include, for example, copper (Cu), stainless steel, titanium (Ti), iron (Fe), cobalt (Co), nickel (Ni), or an alloy thereof. The metal layer may correspond to, for example, a first metal substrate. The metal layer may further include a coating layer including a second metal. In some embodiments, the negative electrode current collector 21 may further include a metal chip and/or a lead tab. For more detailed descriptions of the base film, the metal layer, the metal chip, and the lead tab of the negative electrode current collector 21, reference may refer to the description of the positive electrode current collector. Because the negative electrode current collector 21 has the above-described structure, the weight of the negative electrode may be reduced, and accordingly, energy density of the negative electrode and the lithium battery may be increased.

**Positive electrode**

The above-described positive electrode may be utilized without any change.

**Positive electrode layer: inactive member**

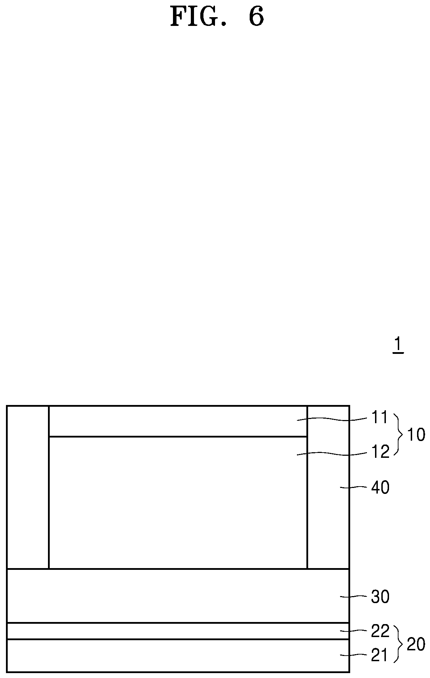

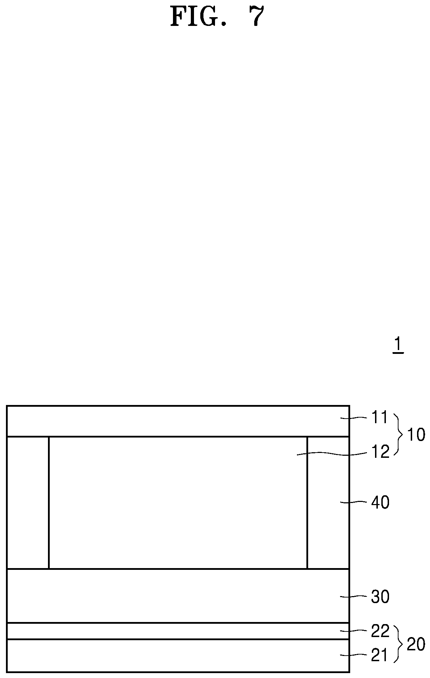

Referring to FIG. 6 and FIG. 7, a positive electrode 10 may include a positive electrode current collector 11, a positive electrode active material layer 12 on (e.g., disposed on) one surface of the positive electrode current collector 11, and an inactive member 40 which may be further disposed on one surface of the positive electrode 10.

Because the inactive member 40 is included, a solid electrolyte layer 30 may be prevented or reduced from being cracked during manufacturing and/or charging/discharging of an all-solid secondary battery 1, thereby improving the cycle characteristics of the all-solid secondary battery 1. In the all-solid secondary battery 1 that does not include the inactive member 40, non-uniform pressure may be applied to the solid electrolyte layer 30 in contact with the positive electrode 10 during manufacturing and/or charging/discharging of the all-solid secondary battery 1, and thus cracks may occur in the solid electrolyte layer 30, and a possibility of a short circuit may increase due to the growth of lithium metal through the cracks.

The inactive member 40 may surround a portion or the entirety of a side surface of the positive electrode 10 and may be in contact with the solid electrolyte layer 30. Because the inactive member 40 surrounds the side surface of the positive electrode 10 and is in contact with the solid electrolyte layer 30, it may effectively suppress or reduce the solid electrolyte layer 30 from being cracked by a pressure difference during a pressing process in the solid electrolyte layer 30 that is not in contact with the positive electrode 10. The inactive member 40 may surround the side surface of the positive electrode 10 and, for example, may be separated from a negative electrode 20, for example, a first negative electrode active material layer 22. The inactive member 40 may surround the side surface of the positive electrode 10, may be in contact with the solid electrolyte layer 30, and may be separated from the negative electrode 20. Therefore, it may suppress or reduce a possibility of a short circuit occurring due to physical contact between the positive electrode 10 and the first negative electrode active material layer 22 or a short circuit due to overcharging of lithium. Referring to FIG. 6, in some embodiments, the inactive member 40 may be disposed on one side surface of the positive electrode active material layer 12 and at the same time may also be disposed on one side surface of the positive electrode current collector 11, thereby more effectively suppressing a possibility of a short circuit occurring due to contact between the positive electrode current collector 11 and the negative electrode 20. In some embodiments, referring to FIG. 7, the inactive member 40 may be disposed on one side surface of the positive electrode active material layer 12 and may be disposed between the solid electrolyte layer 30 and the positive electrode current collector 11 opposite to the solid electrolyte layer 30. The inactive member 40 may not be disposed on one side surface of the positive electrode current collector 11. Because the inactive member 40 is disposed between the positive electrode current collector 11 and the solid electrolyte layer 30, it may effectively prevent or reduce a short circuit due to contact between the positive electrode current collector 11 and the negative electrode 20.

Referring to FIG. 6 and FIG. 7, the inactive member 40 may extend from one side surface of the positive electrode 10 to an end of the solid electrolyte layer 30. Because the inactive member 40 extends to the end of the solid electrolyte layer 30, it may suppress or reduce cracks from occurring at the end of the solid electrolyte layer 30. The end of the solid electrolyte layer 30 may be an outermost portion in contact with the side surface of the solid electrolyte layer 30. The inactive member 40 may extend to the outermost portion in contact with the side surface of the solid electrolyte layer 30. The inactive member 40 may be separated from the negative electrode 20, for example, the first negative electrode active material layer 22. The inactive member 40 may extend to the end of the solid electrolyte layer 30 and may not be in contact with the negative electrode 20. The inactive member 40 may fill, for example, a space extending from one side surface of the positive electrode 10 to the end of the solid electrolyte layer 30.

In one or more embodiments, the inactive member 40 may be, for example, a gasket. Because the gasket is utilized as the inactive member 40, it may effectively suppress or reduce cracks from occurring in the solid electrolyte layer 30 by a pressure difference during a pressing process.

In some embodiments, the inactive member 40 may have, for example, a single layer structure. In some embodiments, the inactive member 40 may have a multi-layer structure. In the inactive member 40 having a multi-layer structure, respective layers may have different compositions. The inert member 40 having a multi-layer structure may have, for example, a two-layer structure, a three-layer structure, a four-layer structure, or a five-layer structure. The inactive member 40 having a multi-layer structure may include, for example, one or more adhesive layers and one or more support layers. For example, the adhesive layer may effectively prevent or reduce separation between the positive electrode 10 and the solid electrolyte layer 30 due to a change in volume of the positive electrode 10 which occurs during a charging/discharging process of the all-solid secondary battery 1 and may provide a binding force between the support layer and other layers to improve film strength of the inactive member 40. The support layer may provide a support force to the inactive member 40, may prevent or reduce non-uniformity of pressure applied on the solid electrolyte layer 30 during a pressing process or a charging/discharging process, and may prevent or reduce the deformation of a shape of the manufactured all-solid secondary battery 1.

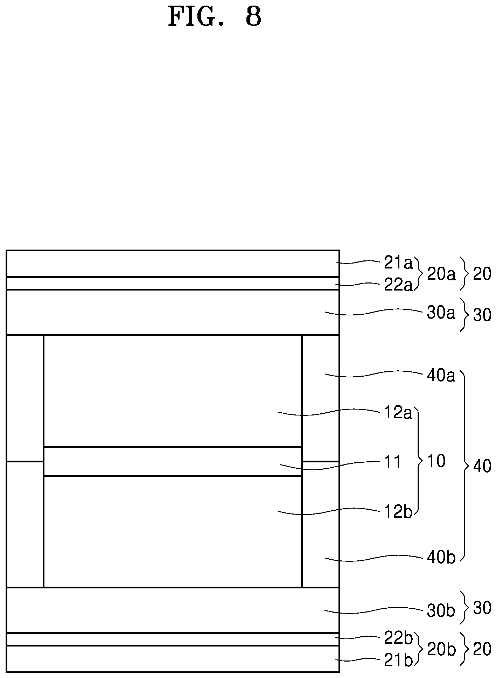

Referring to FIG. 8, in one or more embodiments, an all-solid secondary battery 1 may include a positive electrode 10, a negative electrode 20, and a solid electrolyte layer 30 therebetween, wherein the positive electrode 10 may include a positive electrode current collector 11 and a first positive electrode active material layer 12a and a second positive electrode active material layer 12b separately disposed on two opposite surfaces of the positive electrode current collector 11, the solid electrolyte layer 30 may include a first solid electrolyte layer 30a in contact with the first positive electrode active material layer 12a and a second solid electrolyte layer 30b in contact with the second positive electrode active material layer 12b, the negative electrode 20 includes a first negative electrode layer 20a, which includes a first negative electrode current collector 21a and a first negative electrode active material layer 22a on the first negative electrode current collector 21a, in contact with the first solid electrolyte layer 30a and a second negative electrode layer 20b, which includes a second negative electrode current collector 21b and a second negative electrode active material layer 22b on the first negative electrode current collector 21b, in contact with the second solid electrolyte layer 30b, and a first inactive member 40 is disposed to be around or to surround a side surface of the positive electrode 10 between the first solid electrolyte layer 30a and the second solid electrolyte layer 30b opposite to each other. The first inactive member 40 may include, for example, a $(1a)^{th}$ inactive member 40a in contact with the first solid electrolyte layer 30a and a $(1b)^{th}$ inactive member 40b in contact with the second solid electrolyte layer 30b. Therefore, the all-solid secondary battery 1 may have a bi-cell structure. Because the all-solid secondary battery 1 has such a bi-cell structure, the solid electrolyte layer 30 and the negative electrode 20 are disposed to be symmetrical with and opposite to each other with respect to the positive electrode 10, thereby more effectively suppressing structural deformation due to pressure applied during manufacturing of the all-solid secondary battery 1. Therefore, the solid electrolyte layer 30 may be suppressed or reduced from being cracked during a manufacturing process and/or a charging/discharging process of the all-solid secondary battery 1, and a short circuit of the all-solid secondary battery 1 due to cracks may be prevented or reduced, thereby further improving the cycle characteristics of the all-solid secondary battery 1. In some embodiments, because only one positive electrode current collector 11 is utilized for the plurality of positive electrode active material layers 12a and 12b, the energy density of the all-solid secondary battery 1 may be increased.

Referring to FIGs. 6 to 8, in one or more embodiments, the inactive member 40 may be, for example, a flame retardant inactive member. The flame retardant inactive member may provide flame retardancy so that a possibility of thermal runaway and ignition of the all-solid secondary battery 1 may be prevented or reduced. As a result, the safety of the all-solid secondary battery 1 may be further improved. The flame retardant inactive member may be to absorb residual moisture in the all-solid secondary battery 1, and thus the deterioration of the all-solid secondary battery 1 may be prevented or reduced, thereby improving the lifespan characteristics of the all-solid secondary battery 1.

In one or more embodiments, the flame retardant inert member may include, for example, a matrix and a filler. The matrix may include, for example, a substrate and a reinforcing material. In some embodiments, the matrix may include, for example, a fibrous substrate and a fibrous reinforcing material. Because the matrix includes the substrate, the matrix may have elasticity. Therefore, the matrix may effectively accommodate a volume change of the all-solid secondary battery 1 during charging/discharging and may be disposed in one of one or more suitable positions. The substrate included in the matrix may include, for example, a first fibrous material. Because the substrate includes the first fibrous material, it may effectively accommodate a volume change of the positive electrode 10 caused during a charging/discharging process of the all-solid secondary battery 1 and effectively suppress or reduce the deformation of the inactive member 40 due to the volume change of the positive electrode 10. The first fibrous material may be, for example, a material having an aspect ratio of 5 or more, 20 or more, or 50 or more. In some embodiments, the first fibrous material may be, for example, a material having an aspect ratio of about 5 to about 1,000, about 20 to about 1,000, or about 50 to about 1,000. The first fibrous material may be, for example, an insulating material. Because the first fibrous material is the insulating material, it may effectively prevent or reduce a short circuit between the positive electrode 10 and the negative electrode 20 caused by lithium dendrites generated during charging/discharging of the all-solid secondary battery 1. The first fibrous material may include, for example, at least one selected from a pulp fiber, an insulating polymer fiber, and an ion-conductive polymer fiber. Because the matrix includes the reinforcing material, the strength of the matrix may be improved. Therefore, the matrix may prevent or reduce an excessive volume change during charging/discharging of the all-solid secondary battery 1 and may prevent or reduce the deformation of the all-solid secondary battery 1. The reinforcing material included in the matrix may include, for example, a second fibrous material. Because the reinforcing material includes the second fibrous material, the strength of the matrix may be more uniformly increased. In one or more embodiments, the second fibrous material may be, for example, a material having an aspect ratio of 3 or more, 5 or more, or 10 or more. The first fibrous material may be, for example, a material having an aspect ratio of about 3 to about 100, about 5 to about 100, or about 10 to about 100. The second fibrous material may be, for example, a flame retardant material. Because the second fibrous material is the flame retardant material, it may effectively suppress or reduce ignition due to an external impact or thermal runaway occurring during a charging/discharging process of the all-solid secondary battery 1. The second fibrous material may be, for example, a glass fiber, a metal oxide fiber, a ceramic fiber, and/or the like.

In one or more embodiments, the flame retardant inert member may include a filler in addition to the matrix. The filler may be disposed inside the matrix, may be deposed on a surface of the matrix, or may be disposed in the inside and on the surface of the matrix. The filler may be, for example, an inorganic material. The filler included in the flame retardant inert member may be, for example, a moisture getter. The filler may adsorb moisture at a temperature of, for example, less than 100 °C to remove moisture remaining in the all-solid secondary battery 1 and prevent or reduce the deterioration of the all-solid secondary battery 1. In some embodiments, if (e.g., when) a temperature of the all-solid secondary battery 1 increases to 150 °C or more due to thermal runaway caused by an external impact or during a charging/discharging process of the all-solid secondary battery 1, the filler may release adsorbed moisture to effectively suppress or reduce the ignition of the all-solid secondary battery 1. For example, in one or more embodiments, the filler may be, for example, a flame retardant material. The filler may include, for example, a metal hydroxide having moisture adsorption properties. The metal hydroxide included in the filler may include, for example, $Mg(OH)_2$, $Fe(OH)_3$, $Sb(OH)_3$, $Sn(OH)_4$, $Tl(OH)_3$, $Zr(OH)_4$, $Al(OH)_3$, or a combination thereof. A content (e.g., amount) of the filler included in the flame retardant inactive member may be, for example, about 10 parts by weight to about 80 parts by weight, about 20 parts by weight to about 80 parts by weight, about 30 parts by weight to about 80 parts by weight, about 40 parts by weight to about 80 parts by weight, about 50 parts by weight to about 80 parts by weight, about 60 parts by weight to about 80 parts by weight, or about 65 parts by weight to about 80 parts by weight with respect to about 100 parts by weight of the flame retardant inactive member.

In one or more embodiments, the flame retardant inactive member may further include, for example, a binder. The binder may include, for example, a curable polymer or a non-curable polymer. The curable polymer may be a polymer that is cured by heat and/or pressure. The curable polymer may be, for example, a solid at room temperature. In some embodiments, The flame retardant inert member may include, for example, a thermosetting film and/or a cured product thereof. A thermosetting polymer may be, for example, TSA-66 manufactured by Toray Industries, Inc.

In one or more embodiments, the flame retardant inert member may additionally include other materials in addition to the above-described substrate, reinforcing material, filler, and binder. For example, in some embodiments, the flame retardant inert member may further include at least one selected from paper, an insulating polymer, an ion-conductive polymer, an insulating inorganic material, an oxide-based solid electrolyte, and a sulfide-based solid electrolyte. The insulating polymer may be, for example, an olefin-based polymer such as polypropylene (PP) or polyethylene (PE).

A density of the substrate or a density of the reinforcing material included in the flame retardant inactive member may be, for example, in a range of about 10 % to about 300 %, about 10 % to about 150 %, about 10 % to about 140 %, about 10 % to about 130 %, or about 10 % to about 120 % of a density of a positive electrode active material included in the positive electrode active material layer 12 (e.g., 12a and/or 12b).

The inactive member 40 may be a member that does not include an electrochemically active material, for example, an electrode active material. The electrode active material may be a material that absorbs/desorbs lithium. The inactive member 40 may be a member made of a material utilized in the art other than an electrode active material.

According to one or more embodiments of the present disclosure, a method of preparing a positive electrode may include mixing a composite positive electrode active material and a sulfide-based solid electrolyte.

In one or more embodiments, a method of preparing the composite positive electrode active material may include providing a lithium transition metal oxide, providing a second composite, and mechanically milling the lithium transition metal oxide and the second composite, wherein the second composite includes at least one first metal oxide represented by a formula of $M_aO_b$ (wherein $0<a\leq3$, $0<b<4$, if (e.g., when) a is 1, 2, or 3, and b is not an integer), and a first carbon-based material, wherein the first metal oxide is disposed in a matrix of the first carbon-based material, and M is at least one metal selected from Groups 2 to 16 of the Periodic Table of Elements.

The lithium transition metal oxide is provided. The lithium transition metal oxide may include, for example, a compound represented by a formula selected from Formulas 1 to 5 described above.

The second composite is provided. The providing of the second composite may include, for example, supplying a reaction gas including a carbon source gas to a structure including a second metal oxide and heat-treating the structure to provide the second composite. In one or more embodiments, the providing of the second composite may include, for example, supplying the reaction gas including the carbon source gas to at least one second metal oxide represented by $M_aO_c$ (wherein $0<a\leq3$, $0<c\leq4$, and if (e.g., when) a is 1, 2, or 3, b is an integer), and heat-treating the second metal oxide to prepare the second composite, wherein M is at least one metal selected from Groups 2 to 16 of the Periodic Table of Elements.

The carbon source gas may be a gas including a compound represented by Formula 7 or may be at least one mixed gas selected from the compound represented by Formula 7, a compound represented by Formula 8, and an oxygen-containing gas represented by Formula 9.

$$\textbf{Formula 7} \qquad \textbf{C}_n\textbf{H}_{(2n+2-a)}\textbf{[OH]}_a$$

In Formula 7, n may be 1 to 20, and a may be 0 or 1.

$$\textbf{Formula 8} \qquad \textbf{C}_n\textbf{H}_{2n}$$

In Formula 8, n may be 2 to 6.

$$\textbf{Formula 9} \qquad \textbf{C}_x\textbf{H}_y\textbf{O}_z$$

In Formula 9, x may be 0 or an integer from 1 to 20, y may be 0 or an integer from 1 to 20, and z may be 1 or 2.

The compound represented by Formula 7 and the compound represented by Formula 8 may include at least one selected from methane, ethylene, propylene, methanol, ethanol, and propanol. The oxygen-containing gas represented by Formula 9 may include, for example, carbon dioxide ($CO_2$), carbon monoxide (CO), water vapor ($H_2O$), or a mixture thereof.

After supplying of the reaction gas including the carbon source gas to the second metal oxide represented by $M_aO_c$ (wherein $0<a\leq3$, $0<c\leq4$, and if (e.g., when) a is 1, 2, or 3, b is an integer) and performing heat treatment, cooling utilizing at least one inert gas selected from nitrogen, helium, and argon may be further performed. The cooling refers to an operation of adjusting a temperature to room temperature (of 20 °C to 25 °C). The carbon source gas may include at least one inert gas selected from nitrogen, helium, and argon.

In the method of preparing the second composite, a process of growing the first carbon-based material, for example, graphene, according to a gas phase reaction may be performed under one or more suitable conditions.

In one or more embodiments, according to a first condition, for example, first, methane is supplied to a reactor in which the second metal oxide represented by $M_aO_c$ (wherein $0<a\leq3$, $0<c\leq4$, and if (e.g., when) a is 1, 2, or 3, b is an integer) is disposed, and a temperature is raised to a heat treatment temperature T. A time taken for the temperature to be raised to the heat treatment temperature T may be about 10 minutes to about 4 hours, and the heat treatment temperature T may be in a range of about 700 °C to about 1,100 °C. Heat treatment may be performed at the heat treatment temperature T for a reaction time. The reaction time may be, for example, about 4 hours to about 8 hours. The heat-treated product may be cooled to room temperature to prepare a composite (e.g., second composite). A time taken during a process of performing cooling from the heat treatment temperature T to room temperature may be, for example, about 1 hour to about 5 hours.

In one or more embodiments, according to a second condition, for example, first, hydrogen is supplied to a reactor in which the second metal oxide represented by $M_aO_c$ (wherein $0<a\leq3$, $0<c\leq4$, and if (e.g., when) a is 1, 2, or 3, b is an integer) is disposed, and a temperature is raised to a heat treatment temperature T. A time taken for the temperature to be raised to the heat treatment temperature T may be about 10 minutes to about 4 hours, and the heat treatment temperature T may be in a range of about 700 °C to about 1,100 °C. After heat treatment is performed at the heat treatment temperature T for a certain reaction time, a methane gas may be supplied, and heat treatment may be performed for the remaining reaction time. The reaction time may be, for example, about 4 hours to about 8 hours. The heat-treated product may be cooled to room temperature to prepare a composite (e.g., second composite). Nitrogen may be supplied during a cooling process. A time taken during a process of performing cooling from the heat treatment temperature T to room temperature may be, for example, about 1 hour to about 5 hours.

In one or more embodiments, according to a third condition, for example, first, hydrogen is supplied to a reactor in which the second metal oxide represented by $M_aO_c$ (wherein $0<a\leq3$, $0<c\leq4$, and if (e.g., when) a is 1, 2, or 3, b is an integer) is disposed, and a temperature is raised to a heat treatment temperature T. A time taken for the temperature to be raised to the heat treatment temperature T may be about 10 minutes to about 4 hours, and the heat treatment temperature T may be in a range of about 700 °C to about 1,100 °C. After heat treatment is performed at the heat treatment temperature T for a certain reaction time, a mixed gas of methane and hydrogen may be supplied, and heat treatment may be performed for the remaining reaction time. The reaction time may be, for example, about 4 hours to about 8 hours. The heat-treated product may be cooled to room temperature to prepare a composite (e.g., second composite). Nitrogen may be supplied during a cooling process. A time taken during a process of performing cooling from the heat treatment temperature T to room temperature may be, for example, about 1 hour to about 5 hours.

In a process of preparing the second composite, if (e.g., when) the carbon source gas includes water vapor, the second composite having very excellent or suitable conductivity may be obtained. A content (e.g., amount) of water vapor in a gas mixture is not limited and may be, for example, in some embodiments, in a range of about 0.01 vol% to about 10 vol% with respect to about 100 vol% of the total carbon source gas. The carbon source gas may include, for example, methane, a mixed gas including methane and an inert gas, or a mixed gas including methane and an oxygen-containing gas.

In one or more embodiments, the carbon source gas may include, for example, methane, a mixed gas of methane and carbon dioxide, or a mixed gas of methane, carbon dioxide, and water vapor. A molar ratio of methane to carbon dioxide in the mixed gas of methane and carbon dioxide may be about 1:0.20 to 1:0.50, about 1:0.25 to 1:0.45, or about 1:0.30 to 1:0.40. A molar ratio of methane to carbon dioxide and water vapor in the mixed gas of methane, carbon dioxide, and water vapor may be in a range of about 1:0.20 to about 0.50:0.01 to 1.45, about 1:0.25 to about 0.45:0.10 to 1.35, or about 1:0.30 to about 0.40:0.50 to 1.0.

In some embodiments, the carbon source gas may include, for example, carbon monoxide or carbon dioxide. In some embodiments, the carbon source gas may include, for example, a mixed gas of methane and nitrogen. A molar ratio of methane to nitrogen in the mixed gas of methane and nitrogen may be in a range of about 1:0.2 to about 1:0.5, about 1:0.25 to about 1:0.45, or about 1:0.3 to about 1:0.4. In some embodiments, the carbon source gas may not include(e.g., may exclude) an (or any) inert gas such as nitrogen.

in one or more embodiments, heat treatment pressure may be selected in consideration of a heat treatment temperature, a composition of a gas mixture, and a desired or suitable amount of carbon coating. The heat treatment pressure may be controlled or selected by adjusting an inflow amount of a gas mixture and an outflow amount of the gas mixture. The heat treatment pressure may be, for example, 0.5 atm or more, 1 atm or more, 2 atm or more, 3 atm or more, 4 atm or more, or 5 atm or more. In some embodiments, the heat treatment pressure may be, for example, in a range of about 0.5 atm to about 10 atm, about 1 atm to about 10 atm, about 2 atm to about 10 atm, about 3 atm to about 10 atm, about 4 atm to about 10 atm, or about 5 atm to about 10 atm.

A heat treatment time is not particularly limited and may be appropriately adjusted according to a heat treatment temperature, heat treatment pressure, a composition of a gas mixture, and a desired or suitable amount of carbon coating. For example, in some embodiments, a reaction time at the heat treatment temperature may be, for example, about 10 minutes to about 100 hours, about 30 minutes to about 90 hours, or about 50 minutes to about 40 hours. For example, as the heat treatment time increases, an amount of deposited carbon, for example, an amount of graphene (carbon) may increase, and thus the electrical properties of a composite may be improved. However, such a tendency may not necessarily be directly proportional to time. For example, after a certain period of time, carbon deposition, for example, graphene deposition may no longer occur or a deposition rate may decrease.

Through the above described gas phase reaction of the carbon source gas, even at a relatively low temperature, the first carbon-based material, for example, graphene, may be substantially uniformly applied on at least one selected from the second metal oxide represented by $M_aO_c$ (wherein $0<a\leq3$, $0<c\leq4$, and if (e.g., when) a is 1, 2, or 3, c is an integer) and the first metal oxide represented by $M_aO_b$ ($0<a\leq3$, $0<b<4$, a is 1, 2, or 3, and b is not an integer) that is a reduction product thereof, thereby obtaining a composite.

The second composite may include, for example, a matrix of a first carbon-based material, for example, graphene matrix, having at least one structure selected from a spherical structure (e.g., a substantially spherical structure), a spiral structure in which a plurality of spherical structures (e.g., substantially spherical structures) are connected, a cluster structure in which a plurality of spherical structures (e.g., substantially spherical structures) are aggregated, and a sponge structure, and at least one selected from a first metal oxide represented by $M_aO_b$ ($0<a\leq3$, $0<b<4$, a is 1, 2, or 3, and b is not an integer) disposed in the matrix of the first carbon-based material (e.g., graphene matrix) and a second metal oxide represented by $M_aO_c$ ($0<a\leq3$, $0<c\leq4$, and if (e.g., when) a is 1, 2, or 3, c is an integer).

Next, the lithium transition metal oxide and the second composite may be mechanically milled.

In the mechanical milling, a milling method is not particularly limited, and any method may be utilized as long as the method is a method of bringing a lithium transition metal oxide into contact with a composite utilizing a machine and is usable in the art.

During milling, for example, in some embodiments, a Novilta mixer and/or the like may be utilized. The number of revolutions of the mixer during milling may be, for example, in a range of about 1,000 rpm to about 5,000 rpm. A milling time may be, for example, about 5 minutes to about 100 minutes, about 5 minutes to about 60 minutes, or about 5 minutes to about 30 minutes.

An average particle diameter (D50) of the second composite utilized in mechanically milling the first lithium transition metal oxide and the composite may be, for example, in a range of about 50 nm to about 200 nm, about 100 nm to about 300 nm, or about 200 nm to about 500 nm.

Hereinafter, the disclosure will be described in more detail through the following Examples and Comparative Examples. However, the following Examples and Comparative Examples are merely presented to exemplify the disclosure, and the scope of the disclosure is not limited thereto.

**Preparation of complex**

**Preparation Example 1: Al$_2$O$_3$@Gr composite**

After Al$_2$O$_3$ particles (average particle diameter: about 20 nm) were placed in a reactor, an internal temperature of the reactor was raised to 1000 °C under a condition in which CH$_4$ was supplied into the reactor at a rate of about 300 sccm (i.e., standard cubic centimeters per minute) and pressure of 1 atm for about 30 minutes.

Subsequently, heat treatment was performed while a temperature of 1000 °C was maintained for 7 hours. Next, the internal temperature of the reactor was adjusted to room temperature (20 °C to 25 °C) to obtain a composite in which Al$_2$O$_3$ particles and Al$_2$O$_z$ (wherein $0<z<3$) as a reduction product thereof were embedded in graphene.

A content (e.g., amount) of alumina included in the composite was 60 wt%.

**Preparation of composite positive electrode active material**

**Example 1: Al$_2$O$_3$@Gr composite 0.05 wt% (alumina 0.03 wt%) coating NCA94**

LiNi$_{0.94}$Co$_{0.04}$Al$_{0.02}$O$_2$ (hereinafter referred to as NCA94) having an average particle diameter of 14 $\mu$m and the composite prepared in Preparation Example 1 were milled at a rotation speed of about 1,000 to about 2,000 rpm for about 5 to about 30 minutes utilizing a Nobilta mixer (manufactured by Hosokawa in Japan), thereby preparing a composite positive electrode active material. NCA94 and the composite were mixed at a ratio of 99.95:0.05 to prepare a composite positive electrode active material.

It was confirmed that carbon nanotubes were disposed on a surface of the composite positive electrode active material. The carbon nanotubes include a carbon nanotube primary structure and a carbon nanotube secondary structure formed by aggregating a plurality of carbon nanotube units.

The carbon nanotube primary structure includes one carbon nanotube unit. The carbon nanotube unit had a length of 200 nm to about 1,000 nm, and the carbon nanotube had a diameter of about 10 nm.

The carbon nanotube secondary structure was formed by aggregating a plurality of carbon nanotube units. The carbon nanotube secondary structure had a length of 3,000 nm or more and a diameter of about 40 nm.

### Example 2: Al$_2$O$_3$@Gr composite 0.1 wt% coating NCA94

A composite positive electrode active material was prepared in substantially the same manner as in Example 1, except that a mixing ratio of NCA94 and a composite was changed to 99.9:0.1.

### Example 3: Al$_2$O$_3$@Gr composite 0.4 wt% coating NCA94

A composite positive electrode active material was prepared in substantially the same manner as in Example 1, except that a mixing ratio of NCA94 to the composite was changed to 99.6:0.4.

### Comparative Example 1: bare NCA94

NCA94 having an average particle diameter of 14 $\mu$m was utilized as a composite positive electrode active material.

### Comparative Example 2: LZO 0.25 wt% coating NCA94

As a positive electrode active material, $LiNi_{0.94}Co_{0.04}Al_{0.02}O_2$ (NCA94) coated with 0.25 wt% of lithium zirconium oxide (LZO) was prepared. The positive electrode active material coated with LZO was prepared according to the method disclosed in Korean Patent Publication No. 10-2016-0064942, which is incorporated herein by reference in its entirety.

### Manufacturing of all-solid secondary battery

### Example 4

### Preparation of positive electrode

As a positive electrode active material, the composite positive electrode active material prepared in Example 1 was prepared. As a solid electrolyte, a mixture having a weight ratio of 3:1 of crystalline $Li_6PS_5Cl$ having an average particle size of 3 $\mu$m and crystalline $Li_6PS_5Cl$ having an average particle size of 1 $\mu$m, which were each an argyrodite-type or kind crystal, was prepared. As a conductive material, carbon nanofibers (CNF) were prepared. A mixture of a positive electrode active material, a solid electrolyte, and a conductive material having a weight ratio of 60:35:5 was prepared. After a binder solution was added and mixed such that a binder was included at 2 wt% with respect to the total weight of the mixture, the mixture was molded into a sheet form and dried to prepare a positive electrode sheet. The prepared positive electrode sheet was pressed on one surface of a positive electrode current collector made of carbon-coated aluminum foil having a thickness of 18 $\mu$m to prepare a positive electrode layer.

### Preparation of solid electrolyte layer

1 part by weight of a styrene-butadiene rubber (SBR) binder with respect to 100 parts by weight of a solid electrolyte was added to a crystalline $Li_6PS_5Cl$ solid electrolyte having an average particle diameter of 3 $\mu$m to prepare a mixture. Xylene and diethylbenzene were added to the prepared mixture and stirred to prepare a slurry. The prepared slurry was applied on a nonwoven fabric utilizing a blade coater and dried in the air at a temperature of 40 °C to obtain a stack. The obtained stack was vacuum-dried at a temperature of 40 °C for 12 hours. A solid electrolyte layer was prepared through such a process.

### Manufacturing of all-solid secondary battery

The solid electrolyte layer was disposed on one surface of a positive electrode layer on a bottom of a container, a Li-In alloy foil as a negative electrode active material layer was disposed on the solid electrolyte layer, and an SUS current collector was disposed on the Li-In alloy foil, thereby preparing a stack. A lid of the container was rotated to press the prepared stack, thereby manufacturing a torque cell. The solid electrolyte layer is sintered through such pressing treatment, thereby improving battery characteristics.

**Examples 5 and 6**

Torque cells were each manufactured in substantially the same manner as in Example 4, except that the composite positive electrode active materials prepared in Example 2 and Example 3 were respectively utilized instead of the composite positive electrode active material prepared in Example 1.

**Comparative Examples 3 and 4**

Torque cells were each manufactured in substantially the same manner as in Example 4, except that the composite positive electrode active materials prepared in Comparative Example 2 and Comparative Example 3 were respectively utilized instead of the composite positive electrode active material prepared in Example 1.

**Evaluation Example 1: X-ray photoelectron spectroscopy (XPS) spectrum evaluation**

In a process of preparing the composite prepared in Preparation Example 1, an XPS spectrum was measured over time utilizing a Quantum 2000 (manufacturing by Physical Electronics, Inc.). Before heating, XPS spectra of C 1s orbitals and Al 2p orbitals of samples were measured after 1 minute, after 5 minutes, after 30 minutes, after 1 hour, and after 4 hours, respectively. At the initial heating, only a peak for the Al 2p orbital appeared, and a peak for the C 1s orbital did not appear. After 30 minutes, a peak for the C 1s orbital appeared clearly, and a size of a peak for the Al 2p orbital was significantly reduced.

After 30 minutes, near 284.5 eV, a peak for the C 1s orbital appeared clearly due to a C-C bond and a C=C bond due to graphene growth.

As a reaction time elapsed, the oxidation number of aluminum decreased, and thus a peak position of the Al 2p orbital was shifted toward a lower binding energy (eV).

Accordingly, it was confirmed that, as a reaction proceeded, graphene was grown on $Al_2O_3$ particles, and $Al_2O_x$ (wherein 0<x<3), which is a reduction product of $Al_2O_3$, was generated.

Through XPS analysis results, average contents of carbon and aluminum were measured in 10 regions of a composite sample prepared in Preparation Example 1. For the measurement results, a deviation of an aluminum content (e.g., amount) for each region was calculated. The deviation of the aluminum content (e.g., amount) was expressed as a percentage of the average value, and the percentage was referred to as uniformity. The percentage of the average value of the deviation of the aluminum content (e.g., amount), that is, the uniformity of the aluminum content (e.g., amount) was 1 %. Therefore, it was confirmed that alumina was uniformly distributed in the composite prepared in Preparation Example 1.

**Evaluation Example 2: SEM, HR-TEM, and SEM-EDS analyses**

Scanning electron microscope (SEM), high-resolution transmission electron microscope (HR-TEM), and energy-dispersive X-ray spectroscopy (EDS) analyses were each performed on the composite prepared in Preparation Example 1, the composite positive electrode active material prepared in Example 1, and the composite positive electrode active material prepared in Comparative Example 1.

For the EM-EDS analysis, FEI Titan 80-300 manufactured by Philips Company was utilized.

The composite prepared in Preparation Example 1 had a structure in which $Al_2O_3$ particles and $Al_2O_z$ particles (wherein 0<z<3), which were a reduction product thereof, were embedded in graphene. It was confirmed that a graphene layer was disposed at an outer periphery of at least one particle selected from $Al_2O_3$ particles and $Al_2O_z$ (0<z<3) particles. At least one particle selected from $Al_2O_3$ particles and $Al_2O_z$ particles (wherein 0<z<3) were uniformly distributed. At least one particle selected from $Al_2O_3$ particles and $Al_2O_z$ particles (wherein 0<z<3) had a particle diameter of about 20 nm. The composite prepared in Preparation Example 1 had a particle diameter of about 50 nm to about 200 nm. In the composite positive electrode active material prepared in Example 1, it was confirmed that a shell formed by a composite including graphene was disposed on an NCA core.

In an SEM-EDS mapping analysis of the composite positive electrode active materials prepared in Comparative Example 1 and Example 1, it was confirmed that a concentration of aluminum (Al) distributed on a surface of the composite positive electrode active material of Example 1 was increased as compared with a surface of the composite positive electrode active material of Comparative Example 1.

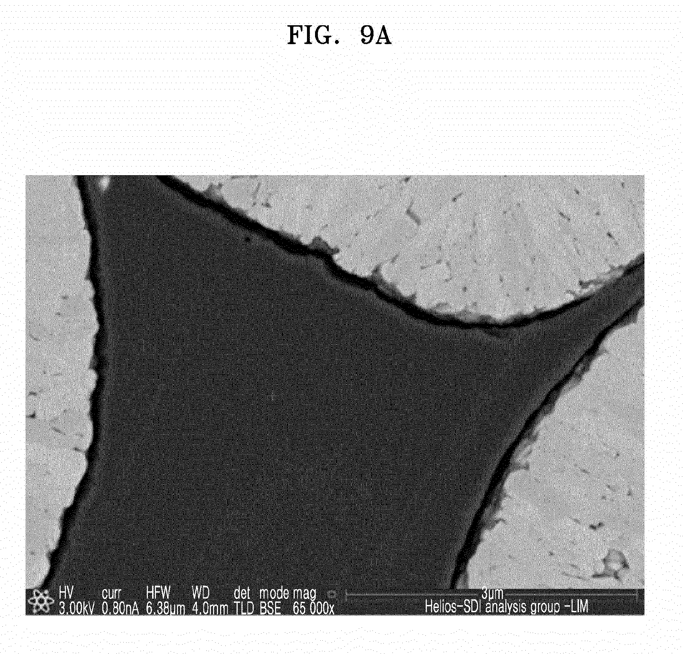

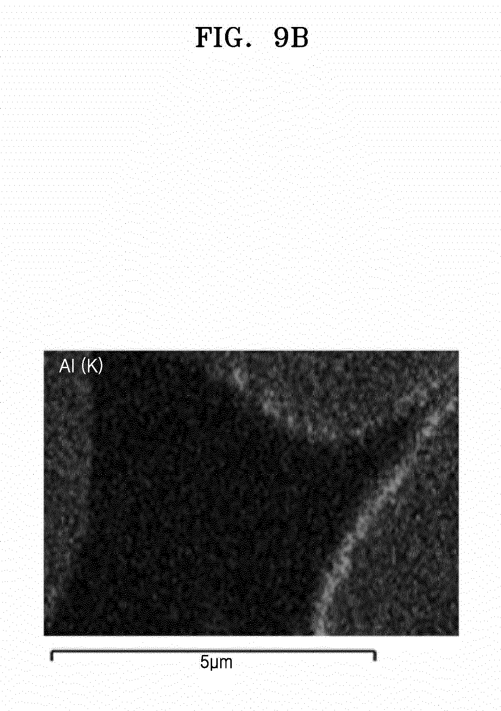

As shown in FIG. 9A and FIG. 9B, it was confirmed that a concentration of aluminum (Al) distributed on the surface of the composite positive electrode active material of Example 1, which was a secondary particle in which a plurality of primary particles were aggregated, was increased.

In the composite positive electrode active material of Example 1, it was confirmed that the composite prepared in Preparation Example 1 was applied on the NCA core to form a shell.

**Evaluation Example 3: XPS spectrum evaluation (graphene-NCA chemical bond)**

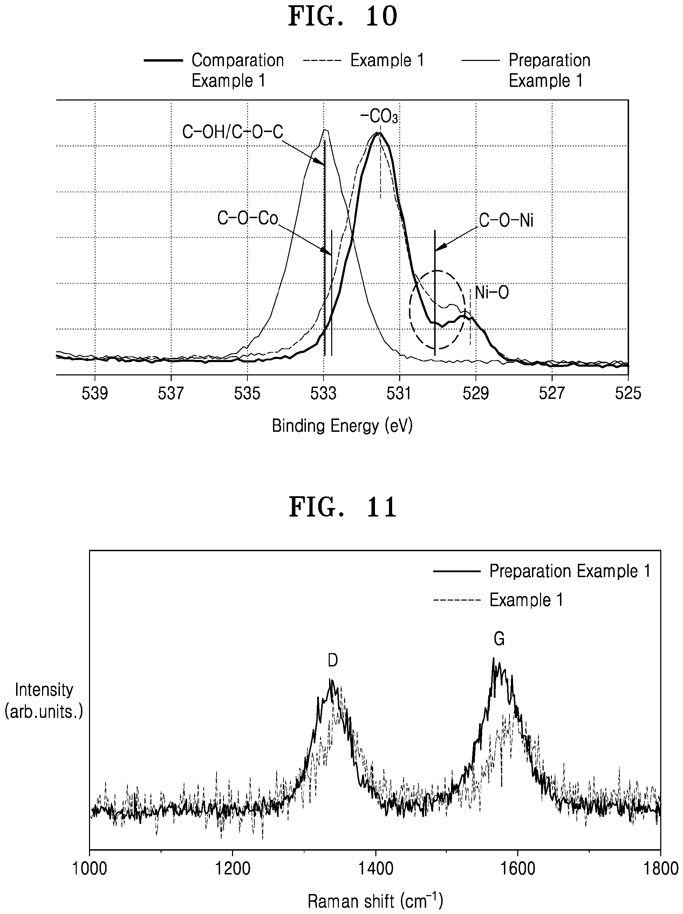

For the composite prepared in Preparation Example 1, the NCA94 of Comparative Example 1, and the composite positive electrode active material prepared in Example 1, XPS spectra of O 1s orbitals were measured utilizing Quantum 2000 (manufacturing by Physical Electronics, Inc.). Results thereof are shown in FIG. 10.

As shown in FIG. 10, for the composite positive electrode active material of Example 1, a peak due to a C-O-Ni bond was observed near 530.2 eV. Such a peak was determined to be due to a bond formed between an NiO phase present on a surface of NCA and carbon of graphene. Therefore, it was confirmed that graphene included in a shell formed on the core formed a covalent bond with Ni which was a transition metal included in the core.

**Evaluation Example 4: Raman spectrum evaluation (graphene-NCA chemical bond)**

Raman spectra were measured on the composite prepared in Preparation Example 1 and the composite positive electrode active material prepared in Example 1. Results thereof are shown in FIG. 11.

As shown in FIG. 11, the composite prepared in Preparation Example 1 exhibited a D band peak at 1,338.7 $cm^{-1}$ and a G band peak at 1575.0 $cm^{-1}$ due to graphene.

On the other hand, in the composite positive electrode active material of Example 1, due to a shell including graphene, a D band peak shifted to 1,351.3 $cm^{-1}$ by about 12 $cm^{-1}$, and a G band peak shifted to 1,593.6 $cm^{-1}$ by about 18 $cm^{-1}$.

It was determined that the shift of the D-band peak was due to strain of graphene bonded to a core to form a shell through milling.

The shift of the G band peak was determined to be due to charge transfer between the core and graphene when the core and graphene formed a composite through a C-O-Ni bond.

Therefore, it was confirmed that graphene included in the shell formed on the core formed a covalent bond with Ni which was a transition metal included in the core.

**Evaluation Example 5: Evaluation of surface residual lithium content (e.g., amount)**

A surface residual lithium content (e.g., amount) was measured on each of the composite positive electrode active materials prepared in Examples 1 to 3 and Comparative Example 1. Some of results thereof are shown in Table 1.

A Li content (e.g., amount) in $Li_2CO_3$ and LiOH remaining on a surface of the composite positive electrode active material was measured through a wet method (or a titration method), thereby evaluating the surface residual lithium content (e.g., amount).

For a specific measurement method, reference may be made in, for example, a method disclosed in paragraph [0054] of Japanese Patent Publication No. 2016-081903, which is incorporated herein by reference.

Table 1

| | Residual lithium content (e.g., amount) [ppm] |
|---|---|
| Comparative Example 1 | 4,109 |
| Example 1 | 4,083 |
| Example 2 | 3,541 |
| Example 3 | 2,870 |

As shown in Table 1, in the composite positive electrode active materials of Examples 1 to 3, the surface residual lithium content (e.g., amount) was each decreased as compared with the composite positive electrode active material of Comparative Example 1.

It is determined that this is because residual lithium on a surface of a lithium transition metal oxide core reacts with a composite to form a shell on a core.

Therefore, as compared with a lithium battery including the composite positive electrode active material of Comparative Example 1, in a lithium battery including the composite positive electrode active material of each of Examples 1 to 3, side reactions with a solid electrolyte are suppressed or reduced during charging/discharging, thereby improving lifespan characteristics.

**Evaluation Example 4: Evaluation of charge/discharge characteristics at high temperature (45 °C)**

The all-solid secondary batteries manufactured in Examples 4 to 6 and Comparative Example 3 to Example 4 were each charged at a constant current rate of 0.1 C at a temperature of 45 °C until a voltage reached 3.63 V (vs. Li-In), and then, in a constant voltage mode, while 3.63 V was maintained, the charging was cut off at a current rate of 0.05 C. Subsequently, the all-solid secondary batteries were discharged at a constant current rate of 0.1 C until the voltage reached 1.88 V (vs. Li-In) during discharging (1st cycle). Such a cycle was repeated under the same conditions up to a 50th cycle.

The all-solid secondary batteries were each rested for 10 minutes after every charging/discharging cycle. Charging/discharging test results at a high temperature are shown in Table 2. A capacity retention ratio is defined by Equation 1.

## Equation 1

$$\text{capacity retention ratio (\%)} = [\text{discharge capacity at 50}^{\text{th}} \text{ cycle/discharge capacity at 1}^{\text{st}} \text{ cycle}] \times 100$$

**Evaluation Example 7: Interfacial resistance evaluation**

Interfacial resistances of the all-solid secondary batteries manufactured in Examples 4 to 6 and Comparative Examples 3 and 4 were each measured before and after the evaluation of charge/discharge characteristics, respectively, Results thereof are shown in Table 2.

Interfacial resistance $R_{ct}$ was obtained by measuring impedance of the all-solid secondary battery through a 2-probe method utilizing an impedance analyzer (Solartron 1400A/1455A impedance analyzer). A frequency range was from 0.1 Hz to 1 MHz, and an amplitude voltage was 10 mV. Measurement was performed at a temperature of 25 °C in an air atmosphere.

Table 2

| | Interfacial resistance before evaluation of charge/discharge characteristics [$\Omega$] | Interfacial resistance after evaluation of charge/discharge characteristics [$\Omega$] | Capacity retention ratio [%] |
|---|---|---|---|
| Example 4: $Al_2O_3$@Gr 0.05 wt% coating | 342 | 732 | 93 |
| Example 5: $Al_2O_3$@Gr 0.1 wt% coating | 271 | 551 | 94 |
| Example 6: $Al_2O_3$@Gr 0.4 wt% coating | 310 | 419 | 98 |
| Comparative Example 3: no coating (bare) | 254 | 1,021 | 89 |
| Comparative Example 4: LZO 0.25 wt% coating | 110 | 991 | 89 |

As shown in Table 2, in the all-solid secondary batteries of Examples 4 to 6, the interfacial resistance before the evaluation of charge/discharge characteristics was increased, but after the evaluation of charge/discharge characteristics, the interfacial resistance was decreased as compared with the all-solid secondary batteries of Comparative Example 3 and Example 4.

In addition, in the all-solid secondary batteries of Examples 4 to 6, lifespan characteristics were improved as compared with the all-solid secondary batteries of Comparative Example 3 and Example 4.

As compared with the composite positive electrode active material of Comparative Example 3 without a coating layer and the composite positive electrode active material of Comparative Example 4 including a metal oxide-based coating layer, in the composite positive electrode active materials of Examples 4 to 6 including a carbon-based coating layer, initial interfacial resistance before the evaluation of charge/discharge characteristics was increased, but in a process of performing charging/discharging, side reactions between a positive electrode active material and a solid electrolyte were suppressed or reduced to suppress or reduce an increase in interfacial resistance, and thus it was determined that lifespan characteristics were rather improved.

According to one or more aspects of embodiments of the present disclosure, with the positive electrode of the present disclosure, side reactions between the lithium transition metal oxide and the solid electrolyte may be suppressed or reduced, thereby providing an all-solid secondary battery with improved cycle characteristics.

As utilized herein, the terms "substantially," "about," and similar terms are used as terms of approximation and not as terms of degree, and are intended to account for the inherent deviations in measured or calculated values that would be recognized by those of ordinary skill in the art.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

In the present disclosure, when particles, tubes, structures, etc., are spherical or circular, "size" or "diameter" indicates a particle, tube, or structure diameter or an average particle, tube, or structure diameter, and when the particles, tubes, structures, etc., are non-spherical or non-circular, the "size" or "diameter" indicates a major axis length or an average major axis length. For example, when particles are spherical, "diameter" indicates a particle diameter, and when the particles are non-spherical, the "diameter" indicates a major axis length. The size or diameter of the particles may be measured utilizing a scanning electron microscope or a particle size analyzer. As the particle size analyzer, for example, HORIBA, LA-950 laser particle size analyzer, may be utilized. When the size of the particles is measured utilizing a particle size analyzer, the average particle diameter (or size) is referred to as D50. D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the drawings, it will be understood by those of ordinary skill in the art that one or more suitable changes in form and details may be made therein without departing from the spirit and scope of the disclosure as defined by the appended claims and equivalents thereof.

**Claims**

1. A positive electrode (10) for an all-solid secondary battery, the positive electrode (10) comprising:

   a positive electrode current collector (11); and
   a positive electrode active material layer (12) on the positive electrode current collector (11),
   wherein the positive electrode active material layer (12) comprises a composite positive electrode active material (300) and a sulfide-based solid electrolyte (400),
   the composite positive electrode active material (300) comprises:

   a core (100) comprising a lithium transition metal oxide; and
   a shell (200) on a surface of the core (100),
   the shell (200) comprises a first metal oxide (210) and a first carbon-based material (220),
   the first metal oxide (210) is in a matrix of the first carbon-based material (220),
   the first metal oxide (210) is represented by a formula of $M_aO_b$ (wherein $0<a\leq3$, $0<b<4$, and if a is 1, 2, or 3, b is not an integer, and M is at least one metal selected from Groups 2 to 16 of the Periodic Table of Elements),
   the lithium transition metal oxide comprises nickel, and
   a nickel amount is 80 mol% or more with respect to a total number of moles of transition metals in the lithium transition metal oxide.

2.  The positive electrode (10) as claimed in claim 1, wherein the first metal oxide (210) comprises a first metal, and the first metal comprises at least one selected from Al, Nb, Mg, Sc, Ti, Zr, V, W, Mn, Fe, Co, Pd, Cu, Ag, Zn, Sb, Si, and Se, preferably the first metal oxide (210) comprises at least one selected from $Al_2O_z$ (wherein 0<z<3), $NbO_x$ (wherein 0<x<2.5), $MgO_x$ (wherein 0<x<1), $Sc_2O_z$ (wherein 0<z<3), $TiO_y$ (wherein 0<y<2), $ZrO_y$ (wherein 0<y<2), $V_2O_z$ (wherein 0<z<3), $WO_y$ (wherein 0<y<2), $MnO_y$ (wherein 0<y<2), $Fe_2O_z$ (wherein 0<z<3), $Co_3O_w$ (wherein 0<w<4), $PdO_x$ (wherein 0<x<1), $CuO_x$ (wherein 0<x<1), $AgO_x$ (wherein 0<x<1), $ZnO_x$ (wherein 0<x<1), $Sb_2O_z$ (wherein 0<z<3), $SiO_z$ (wherein 0<z<2), and $SeO_y$ (wherein 0<y<2).

3.  The positive electrode (10) as claimed in claim 1, wherein the shell (200) further comprises a second metal oxide,

    the second metal oxide is represented by a formula of $M_aO_c$ (wherein 0<a≤3, 0<c≤4, and if a is 1, 2, or 3, c is an integer),
    the second metal oxide comprises the same metal as the first metal oxide (210),
    c/a that is a ratio of c to a of the second metal oxide has a greater value than b/a that is a ratio of b to a of the first metal oxide (210), and
    the second metal oxide is in the matrix of the first carbon-based material (220),
    or
    the second metal oxide is selected from $Al_2O_3$, NbO, $NbO_2$, $Nb_2O_5$, MgO, $Sc_2O_3$, $TiO_2$, $ZrO_2$, $V_2O_3$, $WO_2$, $MnO_2$, $Fe_2O_3$, $Co_3O_4$, PdO, CuO, AgO, ZnO, $Sb_2O_3$, $SiO_2$, and $SeO_2$, and
    the first metal oxide (210) is a reduction product of the second metal oxide.

4.  The positive electrode (10) as claimed in claim 1, wherein the first carbon-based material (220) in the shell (200) is chemically bound to a transition metal of the lithium transition metal oxide included in the core (100) through a chemical bond,

    a carbon atom (C) of the first carbon-based material (220) included in the shell (200) is chemically bound to a transition metal (Me) of the lithium transition metal oxide through a C-O-Me bond via an oxygen atom, and
    the first metal oxide (210) is chemically bound to the first carbon-based material (220) through a chemical bond.

5.  The positive electrode (10) as claimed in claim 1, wherein the shell (200) further comprises a second carbon-based material, a third metal oxide, or a combination thereof,

    the second carbon-based material is a fibrous carbon-based material,
    the third metal oxide is a lithium metal oxide, and
    the lithium metal oxide comprises lithium aluminum oxide, lithium titanium oxide, lithium zirconium oxide, lithium zirconium phosphate, or a combination thereof,
    and/or
    the shell (200) has a thickness of about 10 nm to about 2 $\mu$m, has a single-layer structure or a multi-layer structure, and is a dry coating layer, and
    an amount of the shell (200) is 5 wt% or less with respect to a total weight of the composite positive electrode active material.

6.  The positive electrode (10) as claimed in claim 1, wherein the lithium transition metal oxide is represented by a formula selected from Formulas 1 to 5:

    Formula 1          $Li_aNi_xCo_yM_zO_{2-b}A_b$

    wherein, in Formula 1, 1.0≤a≤1.2, 0≤b≤0.2, 0.8≤x<1, 0≤y≤0.3, 0<z≤0.3, x+y+z=1, M is manganese, niobium, vanadium, magnesium, gallium, silicon, tungsten, molybdenum, iron, chromium, copper, zinc, titanium, aluminum, boron, or a combination thereof, and A is fluorine, sulfur, chlorine, bromine, or a combination thereof,

    Formula 2          $LiNi_xCo_yMn_zO_2$

    Formula 3          $LiNi_xCo_yAl_zO_2$

    wherein, in Formula 2 and Formula 3, 0.8≤x≤0.95, 0≤y≤0.2, 0<z≤0.2, and x+y+z=1,

    Formula 4          $LiNi_xCo_yMn_zAl_wO_2$

wherein, in Formula 4, 0.8≤x≤0.95, 0≤y≤0.2, 0 <z≤0.2, 0<w≤0.2, and x+y+z+w=1, and

Formula 5 $Li_aNi_xMn_yM'_zO_{2-b}A_b$

wherein, in Formula 5, 1.0≤a≤1.2, 0≤b≤0.2, 0.8≤x<1, 0<y≤0.2, 0≤z≤0.2, x+y+z=1, M' is niobium, vanadium, magnesium, gallium, silicon, tungsten, molybdenum, iron, chromium, copper, zinc, titanium, aluminum, boron, or a combination thereof, and A is fluorine, sulfur, chlorine, bromine, or a combination thereof.

7. The positive electrode (10) as claimed in claim 1, wherein the composite positive electrode active material (300) comprises a first composite positive electrode active material and a second composite positive electrode active material,

   the first composite positive electrode active material is a large-diameter composite positive electrode active material having a larger particle diameter than the second composite positive electrode active material, and the second composite positive electrode active material is a small-diameter composite positive electrode active material having a smaller particle diameter than the first composite positive electrode active material, preferably the first composite positive electrode active material comprises secondary particles in which a plurality of primary particles are aggregated, or comprises primary particles having a particle diameter of 1 μm or more, and the second composite positive electrode active material comprises secondary particles in which a plurality of primary particles are aggregated, or comprises primary particles having a particle diameter of 1 μm or more, or preferably the first composite positive electrode active material and the second composite positive electrode active material have a bimodal particle size distribution in a particle size distribution, and a particle diameter ratio of the first composite positive electrode active material to the second composite positive electrode active material is in a range of about 3:1 to about 40:1, or preferably the first composite positive electrode active material has a particle diameter of equal to or greater than about 8 μm to about 30 μm, and the second composite positive electrode active material has a particle diameter of about 1 μm to less than about 8 μm, and a weight ratio of the first composite positive electrode active material to the second composite positive electrode active material is in a range of about 90:10 to about 60:40.

8. The positive electrode (10) as claimed in claim 1, wherein the sulfide-based solid electrolyte (400) comprises a crystalline sulfide-based solid electrolyte, an amorphous sulfide-based solid electrolyte, a glassy sulfide-based solid electrolyte, a glass ceramic sulfide-based solid electrolyte, or a combination thereof and comprises at least one selected from $Li_2S-P_2S_5$, $Li_2S-P_2S_5$-LiX (wherein X is a halogen element), $Li_2S-P_2S_5-Li_2O$, $Li_2S-P_2S_5-Li_2O$-LiI, $Li_2S-SiS_2$, $Li_2S-SiS_2$-LiI, $Li_2S-SiS_2$-LiBr, $Li_2S-SiS_2$-LiCl, $Li_2S-SiS_2-B_2S_3$-LiI, $Li_2S-SiS_2-P_2S_5$-LiI, $Li_2S-B_2S_3$, $Li_2S-P_2S_5-Z_m-S_n$ (wherein m and n are each a positive number, and Z is one selected from Ge, Zn, and Ga), $Li_2S-GeS_2$, $Li_2S-SiS_2-Li_3PO_4$, $Li_2S-SiS_2-Li_pMO_q$ (wherein p and q are each a positive number, and M is one selected from P, Si, Ge, B, Al, Ga, and In), $Li_{7-x}PS_{6-x}Cl_x$ (wherein 0≤x≤2), $Li_{7-x}PS_{6-x}Br_x$ (wherein 0≤x≤2), and $Li_{7-x}PS_{6-x}I_x$ (wherein 0≤x≤2), or

   wherein the sulfide-based solid electrolyte (400) is an argyrodite-type solid electrolyte comprising at least one selected from $Li_6PS_5Cl$, $Li_6PS_5Br$, and LisPSsl, and the argyrodite-type solid electrolyte has a density of about 1.5 g/cc to about 2.0 g/cc.

9. The positive electrode (10) as claimed in claim 1, wherein the sulfide-based solid electrolyte (400) has a particle form and comprises a first sulfide-based solid electrolyte and a second sulfide-based solid electrolyte, wherein the first sulfide-based solid electrolyte and the second sulfide-based solid electrolyte have different particle diameters from each other.

10. The positive electrode (10) as claimed in claim 9, wherein the first sulfide-based solid electrolyte is a large-diameter sulfide-based solid electrolyte having a larger particle diameter than the second sulfide-based solid electrolyte,

    the second sulfide-based solid electrolyte is a small-diameter sulfide-based solid electrolyte having a smaller particle diameter than the first sulfide-based solid electrolyte, in a particle size distribution of the sulfide-based solid electrolyte (400), the sulfide-based solid electrolyte (400) has a bimodal particle size distribution having a first peak corresponding to the first sulfide-based solid electrolyte and a second peak corresponding to the second sulfide-based solid electrolyte, and

a particle diameter ratio of the first sulfide-based solid electrolyte to the second sulfide-based solid electrolyte is in a range of about 2:1 to about 10:1.

11. The positive electrode (10) as claimed in claim 9, wherein the first sulfide-based solid electrolyte has a particle diameter of about 1 $\mu$m to about 10 $\mu$m, and the second sulfide-based solid electrolyte has a particle diameter of about 0.1 $\mu$m to about 2 $\mu$m, and
a weight ratio of the first sulfide-based solid electrolyte to the second sulfide-based solid electrolyte is in a range of about 50:50 to about 90:10.

12. The positive electrode (10) as claimed in claim 1, wherein the positive electrode active material layer (12) further comprises a conductive material and a binder,

the conductive material comprises at least one selected from a fibrous conductive material and a particulate conductive material, and
the binder comprises a fluorine-based binder.

13. An all-solid secondary battery comprising:

the positive electrode (10) as claimed in claim 1;
a negative electrode; and
a solid electrolyte layer between the positive electrode (10) and the negative electrode.

14. The all-solid secondary battery as claimed in claim 13, wherein the solid electrolyte layer comprises an electrolyte,

wherein the electrolyte is a solid electrolyte, a gel electrolyte, or a combination thereof,
wherein the solid electrolyte comprises a sulfide-based solid electrolyte (400), an oxide-based solid electrolyte, a polymer solid electrolyte, or a combination thereof, and
wherein the gel electrolyte comprises a polymer gel electrolyte.

15. The all-solid secondary battery as claimed in claim 14, wherein the negative electrode further comprises a negative electrode current collector,

at least one of the positive electrode current collector (11) or the negative electrode current collector comprises a base film and a metal layer on one surface or two surfaces of the base film,
the base film comprises a polymer,
the polymer comprises polyethyleneterephtalate, polyethylene, polyprolylene, polybutyleneterephthalate, polyimide, or a combination thereof, and
the metal layer comprises indium, copper, magnesium, stainless steel, titanium, iron, cobalt, nickel, zinc, aluminum, germanium, lithium, or an alloy thereof.

# FIG. 1

# FIG. 2

# FIG. 3

# FIG. 4

# FIG. 5

# FIG. 6

# FIG. 7

# FIG. 8

# FIG. 9A

# FIG. 9B

Al (K)

5μm

# FIG. 10

# FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220124524
- KR 1020160064942

- JP 2016081903 A